# EUROPÄISCHE PATENTANMELDUNG

(11) **EP 0 882 531 A2**
(43) Veröffentlichungstag der Anmeldung: **09.12.1998**
(21) Anmeldenummer: 98109749.6
(22) Anmeldetag: 28.05.1998
(51) Int. Cl.: B21D 39/04, B25B 27/14

(54) **Bearbeitungsvorrichtung, insbesondere Presszange**

(30) Priorität: 28.05.1997 DE 19722418; 27.03.1998 DE 19813778
(71) Anmelder: Fränkische Rohrwerke Gebr. Kirchner GmbH & Co., 97486 Königsberg/Bayern (DE)
(72) Erfinder: Burkard, Johannes, 97486 Königsberg (DE); Johannes, Ralf, 97421 Schweinfurt (DE)
(74) Vertreter: Schwabe - Sandmair - Marx

(57) **Zusammenfassung**

Die Erfindung betrifft eine Vorrichtung zum Bearbeiten, etwa Schneiden bzw. Pressen, insbesondere für deformierbare Hülsen, vorzugsweise für Verbundrohre bzw. -leitungen, bevorzugt von Leitungsverbindungen bzw. -anschlüssen, mit mindestens zwei Bearbeitungsorganen, von denen wenigstens eines schwenkbar angeordnet ist, wobei eine Kraftübertragungseinrichtung vorgesehen ist, um eine Antriebskraft für die Bearbeitungsorgane bereitstellen zu können, wobei ferner mindestens eine Betätigungseinrichtung für die Bearbeitungsorgane vorhanden ist; diese Vorrichtung ist erfindungsgemäß so ausgestaltet, daß wenigstens ein Bearbeitungsorgan, insbesondere eine Preßbacke, gegenüber seinem Schwenkpunkt bzw. seiner Schwenkachse in seiner Lage veränderbar ist.

## Beschreibung

Die vorliegende Erfindung betrifft Vorrichtungen zum Bearbeiten, etwa Schneiden bzw. Pressen, insbesondere für deformierbare Hülsen, vorzugsweise für Verbundrohre bzw. Leitungen, bevorzugt von Leitungsverbindungen bzw. -anschlüssen, z.B. Preßzange, mit mindestens zwei Bearbeitungsorganen bzw. Schneid- oder Preßbacken, von denen wenigstens eine schwenkbar angeordnet ist, mit einer Kraftübertragungseinrichtung, um eine Antriebskraft für die Bearbeitungsorgane zur Verfügung zu stellen, sowie mit mindestens einer Betätigungseinrichtung für die Bearbeitungsorgane, wie sie beispielsweise aus der DE 43 21 235 A1 bekannt sind.

Im Stand der Technik sind diverse Vorrichtungen bekannt, mit denen etwa Preßhülsen verformt werden, um darüber Rohrleitungen etwa mit Verbindungsteilen (Fittings) zu verbinden.

Dabei wird einheitlich nach dem Grundsatz gearbeitet, bei dem das kraftschlüssige Aufspreizen von Betätigungsschenkeln, die einen Kraftschluß zu den Backen bewirken, um zwei Drehpunkte erfolgt. Es werden Spreizrollen entlang von Steuerkurven bzw. Steuerkulissen auf die Drehpunkte zu bewegt. Zu diesem Zweck sind die Steuerkurven bzw. Steuerkulissen in Richtung auf die Drehpunkte zulaufend ausgebildet.

Eine Abweichung von diesem Prinzip ist beispielsweise der gattungsgemäßen Druckschrift zu entnehmen, wobei dort eine Zugkraft progressiv, d.h. mit zunehmendem Kraftarm, freigesetzt wird, wobei die Bearbeitungsorgane bzw. die Preßbacken aufeinander zu verschwenkt werden und deren Lastarm im wesentlichen unverändert bleibt.

Auf dem Gebiet leicht verformbarer Klammern, wie sie beispielsweise zur Verbindung von elektrischen Kabeln zu Kabelsträngen herangezogen werden, sind Zangen bekannt, um aus einem Magazin entsprechende C-förmige Klammern zuzuführen, um die Kabel herumzulegen und derart zu verformen, daß sie die Kabel zu einem Bündel verbinden. Eine solche Zange ist beispielsweise der US 3,830,089 aber auch der US 2,867,808 zu entnehmen.

Eine Zange zur Verformung von Hülsen ist der FR-A-2 223 543 zu entnehmen, wobei dort durch die Verschiebung entlang zweier linearer Führungsstrecken die Backen einer Preßvorrichtung zusammengeführt werden. Dort wird durch eine auf einen Bolzen wirkende Zugkraft, der sich innerhalb der linearen Führungsstrecken bewegt, eine Kraft auf die Preßbacken ausgeübt, wobei der Bolzen innerhalb der Führungsstrecken von dem bzw. den Drehpunkten der Preßbacken weggezogen wird.

Ein typischer Vertreter der gegenwärtig verfügbaren Preßzangen ist der US 5,125,324 zu entnehmen, wo das Vorschieben einer Spreizrolleneinrichtung in Richtung der Drehpunkte der Preßbacken dazu führt, daß bei gleichbleibendem Lastarm der Kraftarm abnimmt, so daß die geringste Kraft zu dem Zeitpunkt zur Verfügung steht, wenn prinzipiell die höchst Kraft erforderlich wäre.

Sämtlichen vorgenannten Preßzangen, bis auf die gattungsgemäße Preßzange, ist gemeinsam, daß ein hoher Kraftaufwand erforderlich ist, um die nötige Verpressungskraft bereitzustellen, um eine Hülse in angemessener Weise zu verformen, um eine Sanitärleitung, eine Wasserleitung, eine Heizungsleitung oder dergleichen mit einem Verbindungsteil festzulegen. Dies führt unter anderem zu einem sehr hohen Gewicht der bekannten Vorrichtungen zum Verpressen von Hülsen.

Bei der gattungsgemäßen Preßzange ist es dagegen ein Nachteil, daß durch die Ausbildung des Kraftarmes Hülsen mit größeren Abmessungen nur eingeschränkt verpreßt werden können, und zwar auch weil die Beanspruchung der kraftübertragenden Kulissen aufgrund einer zu hohen Hertz'schen Pressung nicht mehr akzeptabel ist. Dies ist darauf zurückzuführen, daß durch die Schenkel der Kraftarme ein Aufspreizen der Lastarme zum Einführen bzw. Entnehmen entsprechend größerer Rohrdurchmesser bzw. Hülsendurchmesser nicht möglich ist.

Ein Nachteil, den ebenfalls alle vorgenannten Preßzangen aufweisen, betrifft die starke Deformation der zu verpressenden Hülsen bzw. die starke Materialwanderung im Hülsenmaterial beim Preßvorgang. Wenn, wie nach dem Stand der Technik üblich, die Hülse über lediglich zwei Preßbacken verpreßt wird, wird das Hülsenmaterial mit steigendem Preßdruck von den Mittelabschnitten der Backen weg zu den Punkten hin verdrängt, wo die beiden jeweiligen Backenkanten der beiden Preßbanken am Ende des Preßvorgangs aneinander zu liegen kommen. Es entsteht ein Materialfluß in der Preßhülse zu diesen Punkten hin, wobei an den Berührungspunkten der Preßschenkel im geschlossenen Zustand regelrecht Materialüberschüsse, bzw. Materialnasen auftreten können. Durch eine solche starke Deformation aufgrund des Materialflusses werden die Preßhülsen nachteiligerweise strukturell wesentlich geschwächt.

Es ist eine Aufgabe der vorliegenden Erfindung, die im Stand der Technik aufzufindenden Nachteile, wie sie beispielhaft oben aufgeführt sind, soweit als möglich auszuräumen.

Es ist insbesondere eine Aufgabe der vorliegenden Erfindung, eine Vorrichtung zum Bearbeiten, insbesondere für deformierbare Hülsen, vorzugsweise für Kunststoffrohre, Kunststoff-Metallverbundrohre bzw. Verbundrohre bzw. -leitungen, bevorzugt eine Preßzange zur Verfügung zu stellen, welche den Materialfluß im zu bearbeitenden Körper beim Bearbeitungsvorgang reduziert und damit die aus diesem resultierenden nachteiligen Deformationen und Strukturschwächungen dieses Körpers weitgehend verringert.

Es ist ferner insbesondere eine Aufgabe der vorliegenden Erfindung, eine gattungsgemäße Vorrichtung zum Bearbeiten, insbesondere für deformierbare Hülsen, vorzugsweise für Kunststoffrohre, Kunststoff-Metallverbundrohre bzw. Verbundrohre bzw. -leitungen, bevorzugt eine Preßzange, derart weiterzubilden, daß diese auch für größere Rohr- bzw. Hülsendurchmesser einsetzbar ist, wobei die Vorteile der gattungsgemäßen Vorrichtung gegenüber dem bekannten Stand der Technik im wesentlichen unbeeinträchtigt bleiben sollen. Desweiteren soll der Bearbeitungsvorgang diesbezüglich vereinfacht werden.

Es ist die Aufgabe der vorliegenden Erfindung, eine gattungsgemäße Vorrichtung zum Bearbeiten insbesondere für deformierbare Hülsen, vorzugsweise für Kunststoffrohre, Kunststoff-Metallverbundrohre bzw. Verbundrohre bzw. -leitungen, bevorzugt Preßzange, derart weiterzubilden, daß diese auch für größere Rohr- bzw. Hülsendurchmesser einsetzbar ist, wobei die Vorteile der gattungsgemäßen Vorrichtung gegenüber dem bekannten Stand der Technik im wesentlichen unbeeinträchtigt bleiben sollen.

Es ist eine weitere Aufgabe der vorliegenden Erfindung, die ansonsten im Stand der Technik aufzufindenden Nachteile, wie sie beispielhaft oben aufgeführt sind, soweit als möglich auszuräumen.

Die genannten Aufgaben werden durch erfindungsgemäße Vorrichtungen gelöst, wie sie in den unabhängigen Patentansprüchen beschrieben sind. Zweckmäßige Ausführungsformen der Erfindung gehen aus den Unteransprüchen hervor.

Gemäß einem ersten Aspekt der vorliegenden Erfindung ist eine gattungsgemäße Vorrichtung dahingehend weitergebildet worden, daß mindestens drei Bearbeitungsorgane, insbesondere Preßbacken, vorgesehen sind, welche die Bearbeitung, insbesondere das Schneiden bzw. Pressen gemeinsam vornehmen. Der Vorteil der Verwendung von mehr als zwei Bearbeitungsorganen, insbesondere Preßbacken, beruht darauf, daß die beim Bearbeitungsvorgang durch den Materialfluß auftretende Strukturschwächung eingedämmt werden kann. Wenn die Bearbeitungskraft über mehr als zwei, beispielsweise drei Bearbeitungsorgane auf den zu bearbeitenden Körper aufgebracht wird, kann zwar ein gewisser Materialfluß nicht vollständig verhindert werden, die Materialwanderung kann aber durch die besondere Ausgestaltung der einzelnen Bearbeitungsorgane günstig beeinflußt werden. So ist es zum Beispiel möglich, über die Anordnung von mehr als zwei Bearbeitungsorganen auf die zeitliche Abfolge des Materialflusses sowie auf dessen räumliche Verteilung über den Umfang des zu bearbeitenden Körpers Einfluß zu nehmen. Wenn beispielsweise drei Bearbeitungsorgane zum Einsatz kommen, muß das Material des zu bearbeitenden Körpers nicht mehr, wie beispielsweise bei den Preßzangen nach dem Stand der Technik, in einem Umgriffsbereich von ca. 180° fließen. Es fließt bei mehr als zwei Bearbeitungsorganen in kleineren Umgriffsbereichen, die jeweils durch die Angriffsbreite der Bearbeitungsorgane festgelegt sind. Der Materialfluß kann also besser über den Umfang des zu bearbeitenden Körpers verteilt werden. Die strukturelle Schwächung des zu bearbeitenden Körpers wird damit insgesamt vermindert; eventuell entstehende Deformationsnasen bzw. Falze am Umfang sind bedeutend kleiner.

Bei einer bevorzugten Ausführungsform der vorliegenden Erfindung weist die Vorrichtung drei Bearbeitungsorgane, insbesondere Preßbacken auf, von denen zwei schwenkbar sind, während das dritte fest angeordnet ist. Um die mit der Erfindung verbundenen Vorteile zu erzielen, ist es prinzipiell ausreichend, wenn lediglich ein Bearbeitungsorgan bzw. eine Preßbacke schwenkbar für den Bearbeitungsvorgang angeordnet ist. Die oben angesprochene Ausführungsform mit drei Bearbeitungsorganen bzw. Preßbacken, von denen zwei schwenkbar sind, gestattet jedoch eine größere Arbeitsflexibilität, da die Vorrichtung weiter geöffnet werden kann, um beispielsweise größere zu bearbeitende Körper einzuführen. Desweiteren werden bei zwei schwenkbaren Bearbeitungsorganen die Angriffsbereiche der Organe besser für die Wartung oder den Anbau von Hilfsorganen zugänglich.

Die Schwenkbarkeit der Bearbeitungsorgane wirkt sich auch dahingehend vorteilhaft aus, daß beim Anschwenken an den zu bearbeitenden Körper eine gute Anpassung der Stellung der Bearbeitungsorgane an die Form des Körpers gewährleistet werden kann.

Vorteilhafterweise ist eine erfindungsgemäße Vorrichtung so ausgestaltet, daß die Bearbeitungsorgane, insbesondere Preßbacken, den zu bearbeitenden Körper zu im wesentlichen gleichen Teilen umgreifen. Eine solche Ausgestaltung dient der optimalen Verteilung des Materialflusses, wie sie oben eingehend erörtert wurde. Wenn beispielsweise drei Bearbeitungsorgane, insbesondere Preßbacken, den zu bearbeitenden Körper jeweils in einem Umgriffswinkel von etwa 120° umgreifen, wird der Materialfluß über wesentlich geringere Strecken stattfinden und damit die letztendliche Strukturschwächung verringert werden.

Es ist im Rahmen der Erfindung denkbar, mehr als drei Bearbeitungsorgane vorzusehen, um den obigen vorteilhaften Effekt noch besser auszunutzen. Eventuell sollten hierbei auch die 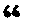 festen 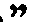 Bearbeitungsorgane in relativ geringem Umfang verschwenkbar angeordnet werden, um Kraftspitzen beim Bearbeitungsvorgang zu vermeiden.

Eine erfindungsgemäße Vorrichtung kann so ausgeführt sein, daß durch eine Kraftübertragungseinrichtung, die auf die Betätigungseinrichtung wirkt, eine Kraft, insbesondere eine Zugkraft oder eine Druckkraft, erzeugbar ist, die das Schließen der Bearbeitungsorgane bewirkt.

Einerseits kann hierbei eine durch die Kraftübertragungseinrichtung erzeugte Druckkraft über die Betätigungseinrichtung auf mindestens eines der Bearbeitungsorgane übertragen werden. Diese Art der Kraftübertragung eignet sich besonders für relativ klein zu konstruierende Vorrichtungen, weil die Druckkraft "in die Vorrichtung hinein" gerichtet ist und damit die Betätigungseinrichtung relativ kurz gehalten werden kann.

Es besteht weiterhin die Möglichkeit, die Vorrichtung so auszugestalten, daß eine durch die Kraftübertragungseinrichtung erzeugte Zugkraft über die Betätigungseinrichtung progressiv auf mindestens eines der Bearbeitungsorgane übertragbar ist, wobei der Kraftarm der Betätigungseinrichtung, insbesondere bestehend aus zwei Schwenkhebeln, gegenüber dem Lastarm der Bearbeitungsorgane zunimmt. Hierbei können relativ geringere Kräfte der Kraftübertragungseinrichtung sehr hohe Bearbeitungskräfte hervorrufen.

Bei einer zum Beispiel als Preßzange ausgestalteten Vorrichtung gemäß der Erfindung wird die Kraftübertragungseinrichtung, beispielsweise in Form eines Elektromotors mit einem Gewindetrieb oder dergleichen, eine Druck- oder Zugkraft ausüben, die zum Schließen der Bearbeitungsorgane, d.h. beispielsweise der Preßbacken, eingesetzt werden kann. Im oben zuletzt genannten Fall wird diese Zugkraft durch eine Preßbackenbetätigungseinrichtung progressiv, d.h. mit zunehmendem Kraftarm, auf die Betätigungseinrichtung der Bearbeitungsorgane und damit auf die Bearbeitungsorgane, insbesondere Preßbacken, übertragen, deren Lastarm im wesentlichen gleich bleibt.

Das Verhältnis von Kraftarm zu Lastarm wird folglich gemäß dieser letzteren Ausführungsform der Erfindung mit fortschreitendem Arbeitsgang besser, so daß die maximale Kraft dann verfügbar ist, wenn die Bearbeitungsorgane bzw. Preßbacken tatsächlich den höchsten Kraftaufwand benötigen. Dabei ist es dann möglich, den Antrieb der erfindungsgemäßen Vorrichtung vorteilhafterweise relativ klein auszubilden, so daß sogar ein Einhandbetrieb in schwierigeren Positionen, d.h. etwa in Rohrschächten oder dergleichen, für einen Handwerker ermöglicht werden kann. Da vorteilhafterweise gemäß dieser Ausführungsform der Erfindung relativ geringe Kräfte aufzuwenden sind, um eine hohe Kraft für die Bearbeitung bereitzustellen, können sämtliche Teile der erfindungsgemäßen Vorrichtung auch vergleichsweise leicht ausgebildet werden, da sich die Belastung in Grenzen halten läßt, was auch dazu führt, daß eine erfindungsgemäß ausgebildete Vorrichtung kaum abgenutzt wird.

In besonders vorteilhafter Weise weist die Betätigungseinrichtung für die Bearbeitungsorgane bzw. die Preßbacken mindestens eine Steuerkurve bzw. -kulisse auf, an der die mindestens eine Rolle bzw. Spreizrolle einer Kraftübertragungseinrichtung geführt wird. Die Steuerkurve bzw. -kulisse weist dabei im geöffneten Zustand der Organe bzw. Preßbacken zu der Linie der im geschlossenen Zustand der Organe bzw. Preß- oder Schneidbacken aneinander anliegenden Backenhälften einen kleineren Winkel auf als im geschlossenen Zustand. Das heißt, die Spreizrollen werden je nach Ausführung mit Druck- oder Zugbetätigung vorgeschoben oder zurückgezogen, wobei die Spreizrollen entlang der Steuerkurve bzw. Steuerkurven laufen, an denen die Spreizrollen abgestützt sind. Hierbei wird die Vorrichtung zur Bearbeitung geschlossen.

Zum Öffnen der Vorrichtung werden die Rollen jeweils in die andere Richtung bewegt.

Gemäß einer vorteilhaften Ausführungsform der Erfindung weisen die Bearbeitungsorgane, insbesondere Preßbacken, Einsätze auf, die bei der Bearbeitung an dem zu bearbeitenden Körper zu liegen kommen, wobei diese Einsätze entweder fest oder in ihrer Umfangsrichtung verschieblich an den Bearbeitungsorganen angebracht sind. Verschiebliche Einsätze gestatten eine verbesserte Anpassung der Bearbeitungsorgane und damit günstige Kraftverhältnisse beim Bearbeitungsvorgang.

Ferner kann eine Verpreßführung für Preßeinsätze in den Preßbacken vorgesehen sein, so daß das Material einer Preßhülse beim Verpreßvorgang keine größeren Strecken zurücklegt. Vorteilhafterweise umfaßt die Verpreßführung eine Gleit- bzw. Rollführung, beispielsweise in der Form eines Kugellagers, zwischen einem oder mehreren Preßeinsätzen, die auf die Preßhülse einwirken, und mindestens einer Preßbacke, so daß eine Radialisierung der Preßkräfte auftritt.

Durch die oben genannten Maßnahmen kann der Materialfluß beim Bearbeitungsvorgang noch weiter eingedämmt werden, um eine Strukturschwächung der Preßhülse zu verringern.

Bei einer vorteilhaften Ausführungsform der Erfindung ist zwischen den Bearbeitungsorganen, insbesondere den Preßbacken und einem Antrieb für die Kraftübertragungseinrichtung, insbesondere einem Elektromotor, eine Überlastkupplung angeordnet.

Durch eine solche Überlastkupplung kann eine Beschädigung der Vorrichtung bei zu hohen auftretenden Bearbeitungskräften vermieden werden.

Gemäß einem weiteren Aspekt der vorliegenden Erfindung wird eine gattungsgemäße Bearbeitungsvorrichtung dahingehend weitergebildet, daß wenigstens ein Bearbeitungsorgan, insbesondere Preßbacken, gegenüber seinem Schwenkpunkt bzw. seiner Schwenkachse automatisch mit der Bewegung der Betätigungseinrichtung, zwischen einer Bearbeitungsposition und einer gelösten Position wechseln kann. Die Betätigungseinrichtung kann dabei insbesondere aus zwei Schwenkhebeln bestehen.

Wenn insbesondere die schwenkbaren Bearbeitungsorgane eine gelöste Position einnehmen können, in welcher sie einen größeren Abstand voneinander einnehmen, besteht erfindungsgemäß vorteilhafterweise die Möglichkeit, auch zu bearbeitende Körper mit größerem Durchmesser in Eingriff zu nehmen, da diese problemloser in die Bearbeitungsvorrichtung eingesetzt werden können. So können zum Beispiel in der gelösten Position der Bearbeitungsorgane Preßhülsen mit größerem Außendurchmesser eingesetzt werden.

Ein Vorteil, den eine Bearbeitungsvorrichtung gemäß diesem Aspekt der Erfindung mit sich bringt, besteht darin, daß bei einer automatischen Überführung der Bearbeitungsorgane aus der Bearbeitungsposition in die gelöste Position, beispielsweise nach dem Abschluß des Bearbeitungsvorgangs, keine Handbetätigung hierfür mehr notwendig ist. Nach dem Bearbeiten kann die Vorrichtung somit sehr einfach von dem zu bearbeitenden Körper gelöst werden. Insbesondere an schwer zugänglichen Einsatzorten ist dies von Vorteil, da eine Herbeiführung der gelösten Position der Bearbeitungsorgane per Hand oder mit einem Werkzeug hier sehr oft besonders umständlich ist.

Wenn im umgekehrten Fall, nämlich kurz vor dem Bearbeitungsvorgang, die Bearbeitungsorgane von einer gelösten Position automatisch beim Übergang zum Bearbeitungsvorgang in die Bearbeitungsposition überführt werden, hat dies den Vorteil, daß nach einer relativ leichten Aufbringung der Vorrichtung auf dem zu bearbeitenden Körper keine weitere separate Tätigkeit mehr notwendig wird, um diesen in der Bearbeitungsposition der Bearbeitungsorgane zu bearbeiten. Entsprechendes gilt umgekehrt, wenn die Bearbeitungsorgane nach einem Bearbeitungsvorgang von dem bearbeiteten Körper entfernt werden sollen.

Der Bearbeitungsvorgang wird dementsprechend vereinfacht.

Gemäß einer bevorzugten Ausführungsform der Erfindung nach diesem Aspekt wird der Positionswechsel der schwenkbaren Bearbeitungsorgane, insbesondere Preßbacken, mit Hilfe einer Kulissenführung an einem feststehenden Vorrichtungsteil durchgeführt. Dabei kann die Kulissenführung eine Führungskulisse im feststehenden Vorrichtungsteil und ein Eingriffsbauteil für die Kulisse am jeweiligen schwenkbaren Bearbeitungsorgan, insbesondere Preßbacke, aufweisen.

Auch die umgekehrte Bauart ist praktikabel, bei der die Führung eine Führungskulisse am jeweiligen schwenkbaren Bearbeitungsorgan, insbesondere Preßbacke, und ein Eingriffsbauteil für die Kulisse im feststehenden Vorrichtungsteil aufweist.

Die Kulissenführung sorgt aufgrund ihrer Ausgestaltung für den automatischen Wechsel der Bearbeitungsorgane von der gelösten Position in die Bearbeitungsposition und umgekehrt beim Schließen bzw. Öffnen der Vorrichtung. Sie bleibt wenigstens im wesentlichen kraftlos.

Bei einer Ausführungsform der Erfindung nach diesem Aspekt ist das feststehende Vorrichtungsteil ein an der Betätigungseinrichtung gelagertes Flachbauteil, welches einen Führungsfortsatz für jedes schwenkbare Bearbeitungsorgan, insbesondere Preßbacke, aufweist, indem die Kulissenführung bzw. das Eingriffsbauteil angeordnet ist. Das Flachbauteil kann als festes Vorrichtungsbauteil dabei auch die Schwenkachsen der Betätigungseinrichtung aufnehmen.

Die Kulisse jeder Kulissenführung hat vorteilhafterweise eine gekrümmte Form mit zwei Endpositionen, nämlich für die Bearbeitungs- und die gelöste Position der Bearbeitungsorgane. Das Eingriffsbauteil für die Kulisse wird hierbei durch die Krümmung in jeder der Positionen vorübergehend festgelegt, und zwar vorzugsweise mit Hilfe eines Spannelementes, insbesondere einer Feder, die am Schwenkpunkt der Betätigungseinrichtung(en) angeordnet ist.

Bei einer bevorzugten Ausgestaltung ist die Führungskulisse nierenförmig ausgebildet, und ihre konvexen Krümmungsabschnitte sind vorzugsweise im wesentlichen zum Bearbeitungszentrum hin gerichtet, wobei der mittlere Abschnitt der Kulisse insbesondere einen Rastvorsprung ausbildet. Der Rastvorsprung in der nierenförmigen Führungskulisse ist u.a. vorgesehen, um zu verhindern, daß das Eingriffsbauteil sich aus einer der Endpositionen heraus in die andere bewegt, wenn dies vom Arbeitsablauf her nicht vorgesehen ist.

Der Abstand zwischen den gegenüberliegenden Innenkanten der Führungskulisse ist vorteilhafterweise größer als die Dicke des Eingriffsbauteils, so daß jede der Innenkanten eine eigene Führungsfunktion übernimmt, wenn das Eingriffsbauteil an ihr entlang geführt wird. Hierdurch kann ein ungehemmter Bewegungsablauf gewährleistet werden, und zwar für alle Betätigungsfälle der Vorrichtung. Durch die Anordnung und Form der verschiedenen Innenkantenabschnitte kann eine Führung verwirklicht werden, die mehrere Aufgaben auf einmal übernimmt. Die Innenkantenabschnitte sind hierzu bevorzugt wie folgt ausgebildet: Ein erster Innenkantenabschnitt, der vor dem Rastvorsprung im Bereich der Öffnungsposition des Eingriffsbauteils liegt, ist nach Winkelposition und Länge so ausgestaltet, daß bei einem Einführen eines zu bearbeitenden Körpers in die geöffnete Vorrichtung, bei dem eine Kraftwirkung auf die Bearbeitungsorgane ausgeübt wird, welche diese zur Bearbeitungposition hin verschiebt, das Eingriffsbauteil an diesem ersten Innenkantenabschnitt entlang über den Rastvorsprung hinweg bewegt wird, ohne daß eine Blockierung dieser Bewegung auftritt.

Der erste Innenkantenabschnitt kann ferner so ausgestaltet sein, daß das Eingriffsbauteil in der gelösten Position der Bearbeitungsorgane ohne oder bei geringer Krafteinwirkung auf die Bearbeitungsorgane sicher vor dem Rastvorsprung gehalten wird.

Ein zweiter Innenkantenabschnitt, der hinter dem Rastvorsprung liegt, ist nach Winkelposition und Länge so ausgestaltet, daß bei einem Ausführen eines zu bearbeitenden Körpers aus der Vorrichtung, bei dem eine Kraftwirkung auf die Bearbeitungsorgane ausgeübt wird, welche diese zu einer geöffneten Position hin verschiebt, das Eingriffsbauteil an diesem zweiten Innenkantenabschnitt entlang bewegt wird.

Ein dritter Innenkantenabschnitt, der dem Rastvorsprung gegenüberliegt, ist nach Winkelposition und Länge so ausgestaltet, daß bei einem Öffnen der Bearbeitungsorgane mittels der Betätigungsvorrichtung, das Eingriffsbauteil an diesem dritten Innenkantenabschnitt entlang bewegt wird.

Eine vorteilhafte Ausführung der erfindungsgemäßen Vorrichtung ist dadurch gekennzeichnet, daß die Kulissenführung so ausgebildet ist, daß, in Zusammenwirkung mit der Kraftübertragungseinrichtung, beim Bearbeitungsvorgang das Eingriffsbauteil für die Führungskulisse in die Endposition der Kulissenführung verbracht bzw. dort gehalten wird, für die das Bearbeitungsorgan, insbesondere Preßbacke, in der Bearbeitungsposition ist, und ansonsten in die andere Endposition verbracht bzw. dort gehalten wird, in der das Bearbeitungsorgan, insbesondere Preßbacke, in der gelösten Position ist.

Mit anderen Worten wird durch die Ausgestaltung der Kulissenführung so auf den Bewegungsablauf der Bearbeitungsorgane Einfluß genommen, daß diese sich automatisch über die Kulissenführung jeweils in die benötigte Position, die gelöste Position bzw. die Bearbeitungsposition, begeben. Die Betätigungseinrichtungen können beispielsweise hierzu eine schon vorher erläuterte Steuerkulisse aufweisen, die durch eine oder mehrere Spreizrollen angefahren wird. Durch das Spreizen der Betätigungseinrichtung, insbesondere durch das Auseinanderspreizen zweier die Betätigungseinrichtung bildenden Schwenkhebel, können somit die Bearbeitungsorgane in die jeweils benötigte Position gebracht werden.

Bevorzugt ist die dabei so ausgebildet, daß, in Zusammenwirkung mit der Kraftübertragungseinrichtung, die Bearbeitungsorgane, insbesondere Preßbacken, erst kurz vor dem Bearbeitungsvorgang in die Bearbeitungsposition gebracht und kurz danach wieder in die gelöste Position überführt werden. Damit wird sichergestellt, daß der zu bearbeitende Körper während des Eingriffsvorgangs noch relativ frei ausgerichtet werden kann, so daß keine Fehlklemmungen entstehen. Während des eigentlichen Bearbeitungsvorgangs befinden sich die Bearbeitungsorgane dann in der Bearbeitungsposition und eine exakte Bearbeitung kann erfolgen.

Natürlich kann eine Vorrichtung gemäß dem zuletzt behandelten Aspekt der Erfindung auch sämtliche Merkmale aufweisen, die im Zusammenhang mit dem ersten Aspekt der vorliegenden Erfindung erörtert wurden. Mit anderen Worten kann auch eine Bearbeitungsvorrichtung mit mindestens drei Bearbeitungsorganen und den hierzu angeführten zusätzlichen Merkmalen mit einer automatischen Überführung der Bearbeitungsorgane von einer gelösten Position in eine Bearbeitungsposition versehen werden, wobei auch alle für die letztere Ausgestaltung beschriebenen vorteilhaften Ausführungsformen Anwendung finden können.

Die genannten Aufgaben werden ferner wenigstens teilweise durch eine Vorrichtung mit den im Patentanspruch 27 aufgeführten Merkmalen gelöst.

Die gemäß der Erfindung zu erzielenden Vorteile beruhen darauf, daß das wenigstens eine Bearbeitungsorgan, insbesondere Preßbacke, gegenüber seinem Schwenkpunkt bzw. seiner Schwenkachse in seiner Läge veränderbar ist. Das heißt, während die Bearbeitungsorgänge beispielsweise während eines Verpreßvorganges in einer bestimmten Läge sind, in der die durch den Verpreßvorgang auftretenden Kräfte abgestützt sind, können die Schwenkpunkte bzw. die Schwenkachsen der Bearbeitungsorgänge, insbesondere Preßbacken durch deren Versetzen im inaktiven Zustand voneinander weg verlagert werden, was dazu führt, daß der Abstand zwischen den einander gegenüberliegenden Betätigungsorganen bzw. Preßbacken vergrößert werden kann, um verpreßte Leitungsverbindungen bzw. -anschlüsse mit großem Durchmesser oder Preßhülsen mit großem Durchmesser aus der erfindungsgemäßen Vorrichtung entnehmen bzw. in diese einsetzen zu können.

Um den angestrebten Effekt erzielen zu können, reicht es prinzipiell aus, wenn lediglich ein Bearbeitungsorgan bzw. eine Preßbacke gegenüber ihrem Schwenkpunkt bzw. ihrer Schwenkachse in ihrer Lage veränderbar ist.

Es ist jedoch zu bevorzugen, wenn beide Bearbeitungsorgane, insbesondere Schneid- oder Preßbacken, jeweils in ihrer Lage gegenüber ihren Schwenkpunkten bzw. Schwenkachsen veränderbar sind, da auf diese Weise ein größerer Abstand zwischen den Preßbacken eingerichtet werden kann, um auch große Durchmesser von Leitungen bzw. deformierbaren Hülsen mit der erfindungsgemäßen Vorrichtung bearbeiten zu können.

Dabei ist es besonders zu bevorzugen, wenn dem bzw. den Bearbeitungsorganen, insbesondere Preßbacken, eine bzw. jeweils eine Führungskulisse zugeordnet ist, so daß der Abstand zwischen den Preßbacken zwischen zwei Grenzwerten veränderbar ist.

Hier lassen sich die Vorteile, der durch einen relativ leichten Aufbau einer erfindungsgemäßen Vorrichtung bzw. Preßzange zu erzielen ist, daß nämlich relativ geringe Kräfte ausreichen, um einen Verpreßvorgang abzuwickeln, und daß die Vorrichtung bzw. Preßzange selbst relativ leicht ausgebildet sein kann, indem die Preßbacken vergleichsweise leicht sind und ein relativ schwach dimensionierter Motor (Niederspannung, beispielsweise 24 Volt) zum Verpressen, d. h. antriebsseitig eine relativ geringe Leistung ausreicht, damit vereinigen, daß auch Leitungen bzw. Preßhülsen mit großen Durchmessern bis hin zu etwa 60 oder gar 70 mm leicht zu bewältigen sind. Es sei angemerkt, daß im Rahmen der vernünftigen Grenzen, die beispielsweise durch die vorhandenen Rohrdurchmesser bzw. Verpreßhülsendurchmesser vorgegeben werden, auch wesentlich größere Durchmesser von Preßhülsen/Leitungen bewältigt werden können.

Es sei angemerkt, daß die erfindungsgemäße Konstruktion natürlich auch bei herkömmlichen Preßzangen einsetzbar ist, jedoch der Einsatz gemäß der Erfindung bevorzugt Anwendung bei gattungsgemäß ausgebildeten Vorrichtungen bzw. Preßzangen finden dürfte.

Vorteilhafterweise wird bei einer Preßzange gemäß der Erfindung die Kraftübertragungseinrichtung, beispielsweise in Form eines Elektromotors mit einem Gewindetrieb oder dergleichen, eine Zugkraft ausüben, die zum Schließen der Bearbeitungsorgane, d.h. beispielsweise der Preßbacken, eingesetzt werden kann. Dabei wird diese Zugkraft durch eine Preßbackenbetätigungseinrichtung progressiv, d.h. mit zunehmendem Kraftarm, auf die Betätigungseinrichtung der Bearbeitungsorgane und damit auf die Bearbeitungsorgane, insbesondere Preßbacken, übertragen, deren Lastarm im wesentlichen gleich bleibt.

Das Verhältnis von Kraftarm zu Lastarm wird folglich gemäß dieser bevorzugten Ausführungsform der Erfindung mit fortschreitendem Arbeitsgang besser, so daß die maximale Kraft dann verfügbar ist, wenn die Bearbeitungsorgane bzw. Preßbacken tatsächlich den höchsten Kraftaufwand benötigen. Dabei ist es dann möglich, den Antrieb der erfindungsgemäßen Vorrichtung vorteilhafterweise relativ klein auszubilden, so daß sogar ein Einhandbetrieb in schwierigeren Positionen, d.h. etwa in Rohrschächten oder dergleichen, für einen Handwerker ermöglicht werden kann. Da vorteilhafterweise gemäß dieser Ausführungsform der Erfindung relativ geringe Kräfte aufzuwenden sind, um eine hohe Kraft für die Bearbeitung bereitzustellen, können sämtliche Teile der erfindungsgemäßen Vorrichtung vergleichsweise leicht ausgebildet werden, da sich die Belastung in Grenzen halten läßt, was auch dazu führt, daß eine erfindungsgemäß ausgebildete Vorrichtung kaum abgenutzt wird. Die vorteilhafterweise bei einer Vorrichtung gemäß der Erfindung einzusetzende Spreizeinrichtung weist eine, vorzugsweise zwei Rollen bzw. Spreizrollen auf, und über eine Zugkraft aufgebracht werden kann, die auf die Kraftarme der Bearbeitungsorgange bzw. Preßbacken einwirkt. Dabei laufen die Rollen bzw. Spreizrollen entlang von Steuerkurven bzw. Steuerkulissen an den Kraftarmen der Bearbeitungsorgane bzw. Preßbacken, wobei der Kraftarm an der Spreizeinrichtung bzw. an der Betätigungseinrichtung zunimmt. Die Spreizrollen können dabei an einem Zugarm gelagert sein, der mit der Kraftübertragungs- bzw. Krafterzeugungseinrichtung verbunden ist.

In besonders vorteilhafter Weise weist die Betätigungseinrichtung für die Bearbeitungsorgane bzw. die Preßbacken mindestens eine Steuerkurve bzw. -kulisse auf, an der die mindestens eine Rolle bzw. die Spreizrolle geführt wird. Die Steuerkurve bzw. -kulisse weist dabei im geöffneten Zustand der Organe bzw. Preßbacken zu der Linie der im geschlossenen Zustand der Organe bzw. Preß- oder Schneidbacken aneinander anliegenden Backenhälften einen kleineren Winkel auf als im geschlossenen Zustand. Das heißt, gemäß dieser Ausgestaltungsform einer Vorrichtung nach der Erfindung werden die Spreizrollen durch eine Zugkraft zurückgezogen, wobei die Spreizrollen entlang der Steuerkurve bzw. Steuerkurven laufen, an denen die Spreizrollen abgestützt sind, wobei die Spreizrollen aufgrund der in Zugrichtung zulaufenden Steuerkurve bzw. Steuerkurven oder -kulissen die Betätigungseinrichtung bzw. -einrichtungen, beispielsweise Betätigungsschenkel, auseinandergespreizt werden. Dadurch wird eine zunehmende Kraft mit progressivem Kraftarm auf die Bearbeitungsorgane bzw. Preßbacken übertragen, wobei die Bearbeitungsorgane bzw. Preßbacken aufeinander zu bewegt werden. Der Kraftarm nimmt auf diese Weise zu und die Kraft vergrößert sich dementsprechend, wobei der größte Kraftarm dann verfügbar ist, wenn an den Preßbacken die größte Kraft benötigt wird, selbst wenn die Kraftübertragungs- bzw. -erzeugungseinrichtung relativ gering dimensioniert sein sollte.

Die Steuerkurve bzw. Steuerkulisse kann gemäß einer besonders vorteilhaften Ausführungsform einen Bereich aufweisen, der insbesondere im geschlossen Zustand der Bearbeitungsorgane bzw. Schneid- oder Preßbacken eine im wesentlichen wirkungsfreie Bewegung, insbesondere einen Freilauf der Spreizrollen bzw. Rollen ermöglicht. Eine Fülleinrichtung kann dabei an der Vorrichtung angeordnet sein, die die wirkungsfreie Bewegung überwacht, um, sobald diese erfaßt wird, eine Anzeige oder eine Endabschaltung veranlassen zu können.

Besondere Vorteile bietet es, wenn die erfindungsgemäße Vorrichtung mit Steuerkurven bzw. wenigstens einer Steuerkurve bzw. -kulisse ausgebildet ist, so daß die Zugkraft die Schwenkpunkte bzw. Achsen bzw. die diesen zugeordneten Bolzen entlang der Führungskulissen bewegt, wobei der Abstand zwischen den Bearbeitungsorganen bzw. Preßbacken verkürzt wird. Letztlich werden auf diese Weise die Schwenkpunkte bzw. -achsen in ihre abgestutzte Position mit geringem Abstand der Bearbeitungsorgane bzw. Preßbacken zueinander überführt, wo dann der eigentliche Arbeitsvorgang, also etwa die Verpressung einer Preßhülse, vorgenommen werden kann. Zu dem genannten Zweck könnte die Steuerkurve bzw. -kulisse an dem Kraftarm eines jeden Bearbeitungsorgans in einem Bereich, in dem ansonsten noch kein Bearbeitungsvorgang eingeleitet worden ist, mit einer größeren Steigung versehen sein, wo die Bearbeitungsorgane bzw. Preßbacken dann linear mit den Spreizrollen mitgenommen werden können, wobei der Schwenkpunkt bzw. die Schwenkachse aus der Einführungs- bzw. Entnahmeposition in die Bearbeitungs- bzw. Verpreßposition überführt werden kann.

Die Führungskulisse bzw. die Führungskulissen können sowohl in den Preßbacken selbst als auch in einer Halteeinrichtung bzw. in Halteplatten vorgesehen sein. Zu bevorzugen ist es, wenn die Schwenkachse fest in einem Bearbeitungsorgan vorgesehen ist und auf beiden Seiten aus dem Bearbeitungsorgan, insbesondere einer Preßbacke, hervorsteht und in die Führungskulissen jeweiliger Platten auf jeder Seite der Bearbeitungsorgane bzw. Preßbacken hineinreicht. Eine symmetrische Abstützung sollte in der Regel zu bevorzugen sein.

Bei Studien der Materialbewegungen von Preßhülsen beim Verpreßvorgang hat es sich ergeben, daß durch die Schwenkbewegung der Preßbacken bei der Verformung einer Preßhülse zunächst ein Materialfluß von der Seite mit geringerem Öffnungswinkel zu der Seite mit größerem Öffnungswinkel an den Preßbacken stattfindet. Wenn sich die Preßbacken weiter schließen, wird der Materialfluß in Richtung des größeren Öffnungsbereiches der Preßbacken forciert, um anschließend, wenn die Preßbacken praktisch geschlossen sind, wieder in der entgegengesetzten Richtung einzusetzen. Dies führt zu einer Schwächung der Struktur der Preßhülsen, da die auftretenden Stauchungs- und Scherkräfte die Kristallstruktur des Materials einer Preßhülse stark in Mitleidenschaft ziehen. Um dem entgegenwirken zu können, ist es von Vorteil, wenn eine zusätzliche Verpreßführung für die Preßbacken vorgesehen ist, so daß das Material der Preßhülse beim Verpreßvorgang keine größeren Strecken zurückzulegen hat. So kann in dem Verpressungsquerschnitt zwischen den Preßbacken eine Gleit- bzw. eine Rollführung vorgesehen sein, beispielsweise in der Gestalt eines Kugellagers. Auf diesen Gleit- bzw. Rollführungsflächen können Verpreßflächen, beispielsweise Verpreßflächenabschnitte, vorgesehen sein, die aus der Verpreßführung abrollen können. Durch die Relativbewegung zwischen den Verpreßflächen und den eigentlichen Preßbacken werden beim Schließen der Preßbacken die auftretenden Preßkräfte radialisiert, d.h. sie sind stärker auf die Zylinderachse der Preßhülse gerichtet, während herkömmlicherweise eine Resultierende vorhanden ist, die zu dem oben angesprochenen Materialfluß führt, der in Richtung des sich verringernden Öffnungsquerschnittes zwischen den Preßbacken, d.h. also bei der bevorzugten Ausführungsform einer Vorrichtung nach der Erfindung, entgegen der aufgewandten Zugkraft verläuft.

Natürlich kann auch die Führungskulisse, die für die Überführung einer jeden Preßbacke in einen Einführ- bzw. Entnahmezustand bzw. in den Aktivzustand vorgesehen ist, mit einer Verpreßführung ausgebildet sein, die so ausgebildet ist, daß die Bearbeitungsorgane bzw. Preßbacken in eine solche Stellung überführt werden, daß eine Parallelisierung der eigentlichen Verpressungsflächen der Preßbacken durchgeführt wird, bevor der eigentliche Preßvorgang durchgeführt wird. Hierfür kann in der Führungskurve bzw. -kulisse ein Minimum vorgesehen sein, das zu überwinden ist, wobei anschließend die Verpreßführung an das Minimum angrenzt, an deren Ende dann der eigentliche Drehpunkt für die Verschwenkbewegung zum Verpressen einer Preßhülse vorgesehen ist.

Um beim Öffnen der erfindungsgemäßen Vorrichtung noch mehr Spielraum zur Verfügung stellen zu können, können die Enden der Kraftarme so ausgebildet sein, daß einerseits zwar die Spreizrollen auf den Steuerkurven bzw. -kulissen abrollen können, anderseits aber die Enden der Kraftarme ineinandergreifen können, wenn die Bearbeitungsorgane bzw. Preßbacken geöffnet sind. So kann am Ende eines Kraftarmes beispielsweise eine verschmälerte Lauffläche vorhanden sein, während an dem Ende des gegenüberliegenden Kraftarmes die Lauffläche in zwei Laufflächen mit einer dazwischenliegenden Ausnehmung bzw. Nut aufgeteilt ist, so daß die verschmälerte Lauffläche des einen Kraftarmes zwischen die aufgeteilte Lauffläche des anderen Kraftarmes einführbar ist. Diese Ausführungsform hat sich jedoch bei den hohen Bearbeitungsdrücken als nur bedingt einsetzbar erwiesen, da die Rollen in Verbindung mit deren zugeordneten Laufflächen an den Steuerkurven bzw. -kulissen benötigt werden, um das Material des Werkzeuges mit Merkmalen nach der Erfindung nicht zu stark zu belasten.

Die Erfindung wird im weiteren anhand der beiliegenden Zeichnungen und Figuren näher erläutert, die vorteilhafte Ausführungsformen der erfindungsgemäßen Vorrichtung zeigen.

Hierbei werden weitere Merkmale und Aspekte der Erfindung offenbart. Es zeigen:
- Figur 1: eine obere Ansicht einer erfindungsgemäßen Vorrichtung, die als Preßzange mit drei Preßbacken ausgeführt ist;
- Figur 2: eine Seitenplatte der Preßzange aus Figur 1 mit einer Führungskulisse für eine Preßbacke, sowie eine Vergrößerung der Führungskulisse;
- Figur 3: eine schwenkbare Preßbacke für die in Figur 1 gezeigte Preßzange,
- Figur 4: eine feste Preßbacke mit einer Grundhalterung;
- Figur 5: einen Preßschenkel der Preßzange aus Figur 1;
- Figur 6 bis Figur 8: einen Bewegungsablauf für den Öffnungsvorgang einer Preßzange nach Figur 1, jeweils mit vergrößerter Führungskulisse;
- Figur 9: die Presszange während des Öffnens per Hand;
- Figur 10 bis Figur 12: einen Öffnungsvorgang für eine weitere Ausführungsform einer Preßzange, die für größere Preßdurchmesser verwendet wird;
- Figur 13: die Presszange der Figuren 10 bis 12 beim Öffnen per Hand;
- Figur 14: eine schematische Seitenansicht einer Vorrichtung mit Merkmalen gemaß der Erfindung, insbesondere einer Preßzange, deren Preßbacken in den Extremalstellungen sind;
- Figur 15: eine weitere Ausführungsform mit Merkmalen gemäß der Erfindung entsprechend Figur 14;
- Figuren 16 bis 18: verschiedene Studien von Bewegungsabläufen bei einer Vorrichtung mit Merkmalen gemäß der Erfindung in einer schematischen Seitenansicht;
- Figuren 19 bis 20: Studien von Bewegungsabläufen für eine andere Ausführungsform mit Merkmalen gemäß der Erfindung; und
- Figuren 21 bis 23: Ausführungsformen von Preßhülsen, die insbesondere für die Verwendung mit einer Vorrichtung mit Merkmalen gemäß der Erfindung geeignet sind, in einem axialen Längsschnitt.

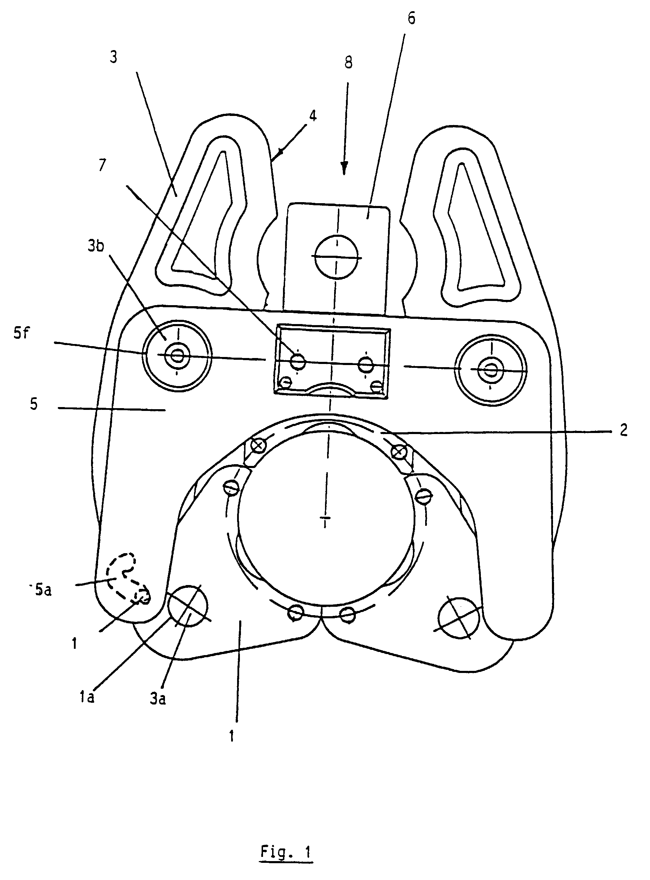

Die in Figur 1 gezeigte Preßzange, die eine erste Ausführungsform einer erfindungsgemäßen Vorrichtung darstellt, ist symmetrisch, so daß nur die Bauteile auf der linken Seite bezeichnet wurden. Sie weist zwei Preßschenkel 3 auf, an deren in der Zeichnung unten dargestellten vorderen Enden jeweils ein Preßbacken-Schwenkbolzen 3a vorgesehen ist. Auf jedem Schwenkbolzen 3a ist jeweils eine Preßbacke 1 schwenkbar gelagert; hierzu weist die Preßbacke 1 eine Aufnahme 1a auf. Zur Verpressung wird weiterhin eine dritte Preßbacke 2 benötigt, die mit Hilfe einer Grundhalterung 6 einen feststehenden Teil der Preßzange bildet. Die Preßschenkel 3 weisen desweiteren etwa in ihrem Mittelbereich angebrachte Preßschenkelbolzen 3b auf, die gleichzeitig die Schwenkachse für die Preßschenkel 3 festlegen.

Auf die Preßschenkelbolzen 3b aufgesetzt ist die Seitenplatte 5 dargestellt, die zu diesem Zweck die Preßschehkelbolzenaufnahmen 5f aufweist. Die Seitenplatte 5 ist wiederum über Halterungen 7 an der Preßbacke 2 befestigt. Die Innenseiten der Preßschenkel 3 weisen eine Steuerungskulisse 4 auf. Diese Steuerungskulisse 4 ist so ausgestaltet, daß Spreizrollen einer Kraftübertragungseinrichtung (nicht dargestellt) an ihr entlanglaufen können und dabei die Spreizstellung, d.h. die Winkelstellung der Preßschenkel 3 in Bezug auf die durch den Preßschenkelbolzen 3b festgelegte Preßschenkel-Schwenkachse ändern können.

Die Preßschenkel 3 und ihre Steuerkulisse 4 sind so ausgebildet, daß Spreizrollen, die in Pfeilrichtung 8 zur Seitenplatte hin geschoben werden, beim Entlanglaufen der Steuerkulisse 4 den Preßvorgang einleiten, d.h. die Preßbacken 1 aufeinander zu und in Richtung der Preßbacke 2 führen.

Beim Läufen von Spreizrollen an der Steuerkulisse 4 erfolgt eine Preßschenkelbewegung, die die Preßbacken 1 in eine jeweilige Arbeitsposition überführt, und zwar mit Hilfe einer Kulissenführung für die Preßbacken 1, die im weiteren noch detailliert erörtert wird.

Hinsichtlich der Figur 1 ist noch anzumerken, daß durch den dargestellten Aufbau mit zwei beweglichen Preßbacken 1 und einer festen Preßbacke 2 nunmehr der schon oben erörterte Vorteil der Erfindung bezüglich des Materialflusses zum Tragen kommt. Jede der Preßbacken 1 umfaßt, wie im geschlossenen Zustand der Figur 1 zu sehen ist, den zu bearbeitenden Körper etwa in einem Winkel von 120°. Hierdurch muß das Material einer zu verpressenden Preßhülse nicht mehr über allzu weite Strecken fließen, wie es bei zweibackigen Preßzangen der Fall ist (180°). Der Materialfluß beim Pressen wird damit besser verteilt, Strukturschwächungen in der Preßhülse können verringert werden.

An dieser Stelle soll kurz auf die bei einem solchen Preßvorgang entstehenden Kräfte eingegangen werden. Der feststehende Teil, also die Grundhalterung 6 muß bei einem Preßvorgang Kräfte aufnehmen, die einer Belastung von etwa 3 bis 4 t entsprechen. Die Preßbacken nehmen Belastungen auf, die etwa 10 t entsprechen, während die Preßschenkelbolzen 3b Lasten aufnehmen können, welche bei 20 t ihre Entsprechung finden. Die einzelnen Bauteile müssen deshalb bezüglich des Materials, der Verarbeitung und ihrer Dimensionierung dementsprechend stark ausgelegt sein. Die Kräfte sind von der Zangengröße sowie von dem zu verpressenden Hülsendurchmesser abhängig. Die Läststeigerung wirkt sich jedoch nicht so dramatisch aus, daß mit derselben Zange nicht Hülsendurchmesser von etwa 40 bis 50 mm verpreßt werden könnten.

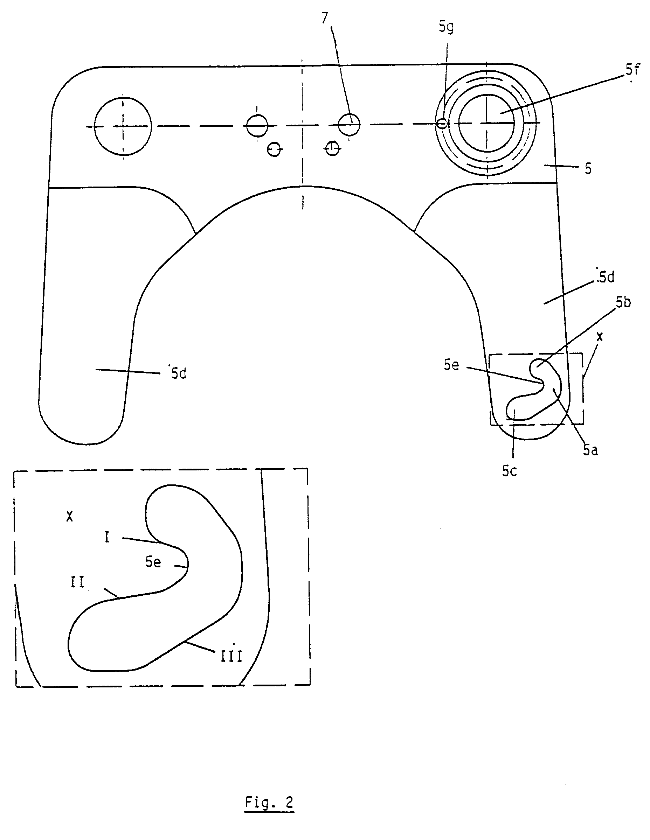

Die Figur 2 zeigt eine Ansicht einer Seitenplatte 5 von der unteren Seite in Figur 1. Von diesen Seitenplatten 5 ist auf jeder Seite der Preßzange eine angeordnet.

Die Seitenplatte 5 weist einen Befestigungsteil mit den Aufnahmen 5f für die Preßschenkel-Schwenkbolzen und der Befestigung 7 an der Grundhalterung 6 auf sowie zwei Führungsfortsätze 5d, von denen der in Figur 2 rechts angeordnete näher erörtert wird. Am Ende des Führungsfortsatzes 5d ist als Ausnehmung die Führungskulisse 5a vorgesehen. Sie hat eine nierenförmige Form mit durchwegs abgerundetem Verlauf. Die Führungskulisse 5a weist die beiden Endpositionen 5b und 5c auf, zwischen denen sich ein Rastvorsprung 5e befindet. Um die Aufnahme 5f, die rechts dargestellt ist, ist noch eine Federaufnahme 5g angebracht. Eine hier einzubringende Feder wirkt zwischen der Seitenplatte 5 und dem Preßschenkel 3, und zwar so, daß dieser Preßschenkel 3 in Schließrichtung der Zange vorgespannt wird.

Die Detailvergrößerung X in Figur 2 zeigt die Führungskulisse 5a und ihre funktionellen Innenkanten I, II und III sowie den Rastvorsprung 5e detaillierter. Die Innenkanten I, II und III übernehmen zusammen mit dem Rastvorsprung 5e jeweils eine eigene Führungsfunktion bei den möglichen Betätigungen der Preßzange. Diese Führungsfunktion wird später anhand eines Öffnungsvorganges der Preßzange detailliert dargestellt. Der erste Innenkantenabschnitt I liegt im Bereich der Endposition 5b vor dem Rastvorsprung 5e, der Innenkantenabschnitt II liegt dahinter. Gegenüber dem Rastfortsatz 5e liegt der Innenkantenabschnitt III.

Die oben beschriebene Kulissenführung dient nunmehr dazu, die Bewegung der Preßbacken 1 zu steuern und zwar so, daß diese aus einer Bearbeitungsposition in eine gelöste Position wechseln können.

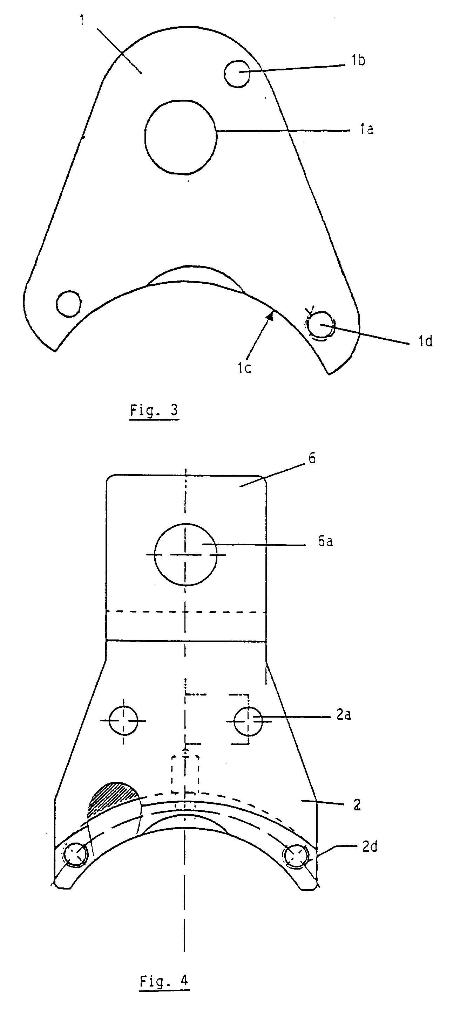

In der Figur 3 ist eine Preßbacke 1 für die Preßzange aus Figur 1 einzeln dargestellt. Sie weist eine Aufnahme 1a für den Preßbacken-Schwenkbolzen 3a auf, durch welchen ihre Schwenkachse festgelegt ist. Die Angriffsfläche der Preßbacke 1 ist mit dem Bezugszeichen 1c bezeichnet. Über Verbindungen 1d können beispielsweise noch Einsätze in den Angriffsbereich der Preßbacke 1 eingesetzt werden.

Oben rechts in Figur 3 ist ein Führungsbolzen 1b der Preßbacke 1 dargestellt. Dieser Führungsbolzen greift im zusammengebauten Zustand der Preßzange in die Führungskulisse 5a der Seitenplatte 5 ein. Durch die jeweilige Stellung des Eingriffsbolzens 1b in der Führungskulisse 5a wird die Bearbeitungsposition bzw. die gelöste Position der Preßbacke 1 festgelegt.

Die Figur 4 zeigt die feste Preßbacke 2, die einstückig mit der Grundhalterung 6 ausgebildet ist. Über die Halterungen 2a wird die feste Preßbacke an der Halterung 7 (siehe Figur 2) der Seitenplatte befestigt.

Über Verbindungen 2d kann auch an der festen Preßbacke 2 ein Preßeinsatz (nicht gezeigt) angebracht werden.

An der einstückig mit der festen Preßbacke 2 verbundenen Grundhalterung 6 ist ein Aufnahmeloch 6a vorgesehen. Die Grundhalterung 6 ist gabelförmig ausgestaltet; es liegen also zwei der in Figur 4 mit dem Bezugszeichen 6 dargestellten Platten hintereinander vor. In der Aufnahme 6a wird, beispielsweise mit einem Haltebolzen, eine Kraftübertragungseinrichtung mit Spreizrollen an der Preßzange befestigt.

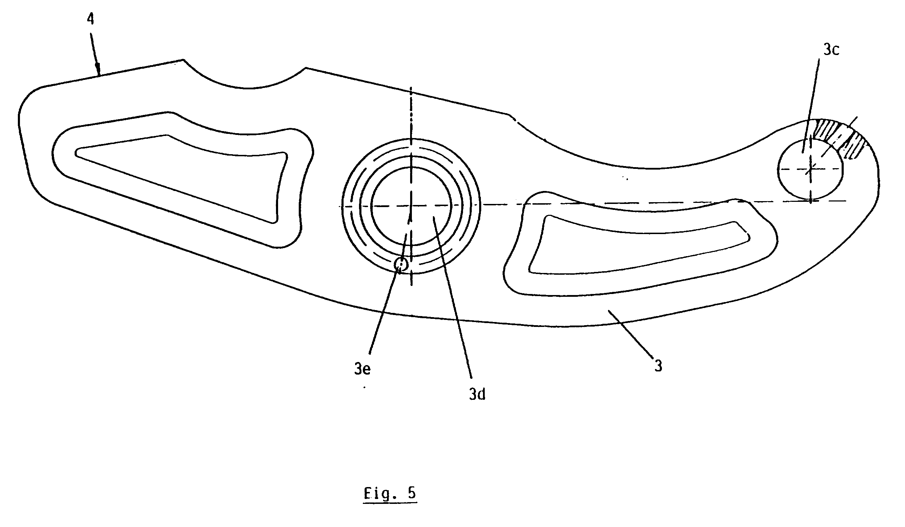

Die Figur 5 zeigt einen Preßschenkel 3 für die erfindungsgemäße Preßzange in Einzeldarstellung. Der Preßschenkel 3 Weist einerseits links die Steuerkulisse 4 auf, an der Spreizrollen einer Kraftübertragungseinrichtung entlanglaufen und andererseits auf der rechten Seite eine Aufnahme 3c für einen Preßbacken-Schwenkbolzen 3a. Dieser kann über die nicht bezeichnete Lochdurchführung befestigt werden.

Mittig ist im Preßschenkel 3 die Aufnahme 3d für einen Preßschenkelbolzen 3b dargestellt. Um diese Aufnahme 3d herum ist eine Federaufnahme 3e gezeigt, in die eine Drehfeder eingesetzt wird, die zwischen der Seitenplatte 5 (siehe Figur 2) und dem Preßschenkel 3 so wirkt, daß dieser in Schließposition der Zange vorgespannt wird.

Zur Beschreibung eines Preßvorgangs soll zunächst nochmals auf die Figur 1 bezuggenommen werden. In Figur 1, die die Preßzange im geschlossenen Zustand zeigt, ist im linken Führungsfortsatz der Seitenplatte 5 gestrichelt die an der Unterseite vorgesehene Führungskulisse 5a sowie der Eingriffsbolzen 1b gezeigt. Im geschlossenen Zustand befindet sich der Eingriffsbolzen 1b an der in Figur 2 gezeigten Endposition 5c der Führungskulisse 5a. Mit der Bewegung der Spreizrollen über die Führungskulisse 4 der Preßschenkel 3 entgegengesetzt der Pfeilrichtung 8 zum Lösen der Preßzange wird mit einer solchen Kulissenführung die Preßbacke 1 nun zunächst entlastet. Dadurch findet schon ein Lösen der Preßbacke 1 von der Preßhülse statt. Durch die Entnahme der Preßhülse nimmt die Preßbacke dann die geöffnete Stellung ein.

Bei dem umgekehrten Verpreßvorgang, d.h. wenn sich die Spreizrollen in Pfeilrichtung 8 bewegen, werden die Preßbacken 1 zunächst in ihrer gelösten Position, d.h. mit dem Eingriffsbolzen 1b nahe der Endposition 5b, zur Preßhülse hin verbracht. Kurz vor dem eigentlichen Preßvorgang wird dann durch die Schenkelbewegung, gesteuert durch die Steuerkulisse 5a, die Preßbacke 1 in ihre Bearbeitungsposition gebracht, indem der Eingriffsbolzen 1b wieder an die in Figur 1 gezeigte Stelle geführt wird. Danach kann der Preßvorgang beginnen.

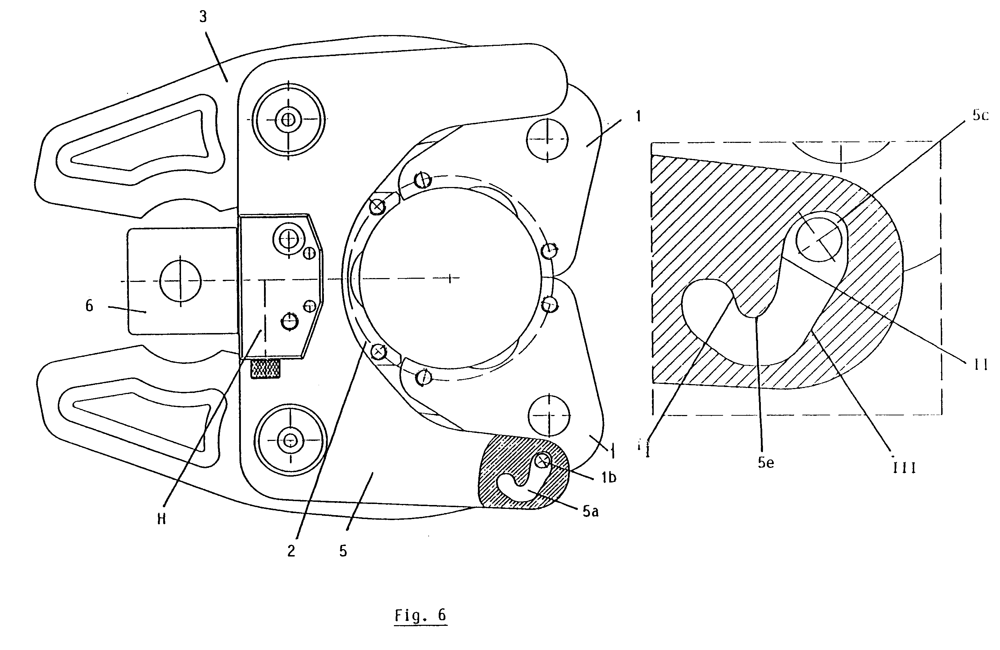

Die einzelnen Vorgänge in der Kulissenführung werden nun zunächst am Beispiel einer kleineren Preßzange detailliert anhand der Figuren 6 bis 9 beschrieben.

Die Figuren 6 bis 9 zeigen jeweils links eine Preßzange, deren Bauteile denjenigen in Figur 1 entsprechen, und die deshalb nicht nochmals einzeln beschrieben werden. Als einziges bisher noch nicht besprochenes Bauteil weist die in Figur 6 dargestellte Preßzange eine Halterung H auf, über die eine beispielsweise gabelförmige Positionierungsvorrichtung an der Seitenplatte 5 befestigt werden kann. Eine solche Positionierungsvorrichtung dient der einfacheren Handhabung der Preßzange und greift beispielsweise in eine vorgefertigte Nut an einer Preßhülse ein, um eine geeignete Positionierung der Zange beim Preßvorgang zu gewährleisten.

Die Figur 6 zeigt die Preßzange gemäß der ersten Ausführungsform der Erfindung in einer geschlossenen Position, also beim Preßvorgang. Die Preßbacken 1 und 2 sind vollständig aneinandergefahren. Am unteren Fortsatz der Seitenplatte 5 ist ausbruchsweise die Kulissenführung 5a mit dem darin eingreifenden Eingriffsbolzen 1b gezeigt; eine Vergrößerung dieses Ausbruchs ist rechts neben der Zange dargestellt. Hier sind wiederum der Rastvorsprung 5e sowie die funktionellen Innenkanten I, II und III der Kulissenführung gezeigt.

Beim Preßvorgang befindet sich der Eingriffsbolzen 1b in der Endposition 5c, ohne an einer Seitenwand der Kulissenführung anzustehen. Die Verpreßkraft wird also in dieser Position nicht über irgendeine Innenkante auf den Eingriffsbolzen 1b übertragen.

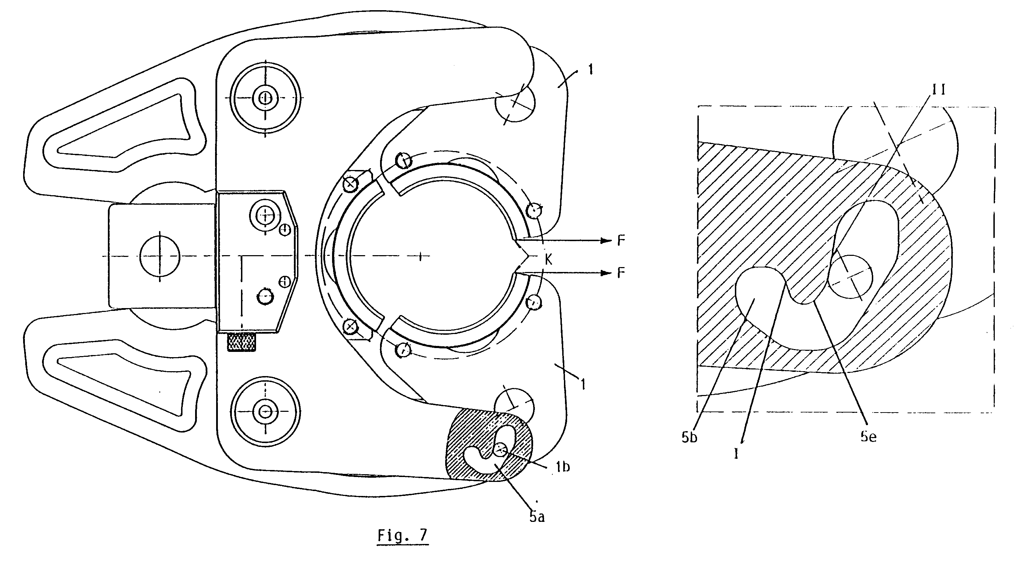

Die Figur 7 zeigt nunmehr den Zustand der Zange kurz nach dem Verpreßvorgang, nämlich in dem Zustand, wo der Vorgang beginnt, bei dem die Preßzange von einer nicht dargestellten verpreßten Hülse abgezogen wird.

Über die Hülse wird an den Kraftangriffspunkten K die mit F angedeutete Kraft auf die Preßbacken 1 aufgebracht. Es beginnt also ein Öffnungsvorgang. Bei diesem Öffnungsvorgang wandert nunmehr der Eingriffsbolzen 1b in der Kulissenführung 5a zum Rastvorsprung 5e hin, und zwar an dem funktionellen Innenkantenabschnitt II entlang. Dieser funktionelle Innenkantenabschnitt II ist bezüglich seiner Länge und Winkellage bzw. Krümmung so ausgestaltet, daß diese Bewegung ohne Hemmung ablaufen kann.

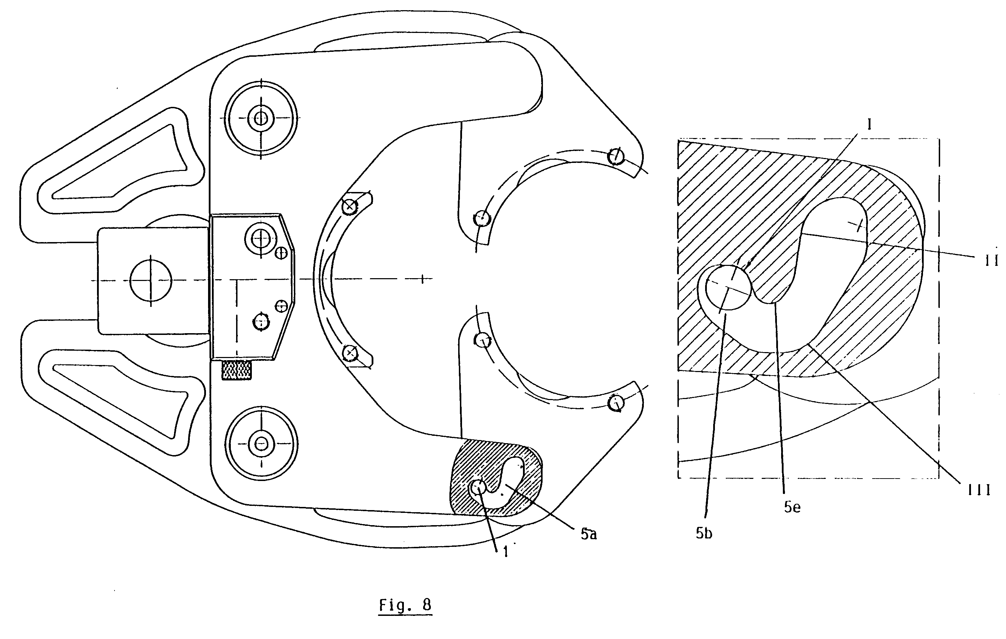

In der Weiterführung dieses Ablaufs überläuft der Eingriffsbolzen 1b den Rastvorsprung 5e weiter entlang dem funktionellen Innenkantenabschnitt I und kommt in der geöffneten Stellung schließlich an der Endposition 5b an. Diese Stellung der Presszange ist in Figur 8 gezeigt. Die Preßbacken 1 sind völlig in die offene Position geschwenkt, d.h. die Preßzange ist vollkommen von der verpreßten Hülse abgezogen.

Auch der Innenkantenabschnitt I ist bezüglich seiner Länge, der Winkellage und der Krümmung so ausgestaltet, daß die Bewegung ohne Hemmung erfolgen kann.

Der umgekehrte Vorgang (Fig. 8, Fig. 7, Fig. 6) findet statt, wenn die geöffnete Zange auf eine Hülse aufgeschoben wird. Der Eingriffsbolzen 1b läuft dann von der Endposition 5b am Innenkantenabschnitt I entlang über den Rastvorsprung 5e. Hierauf wird er am Innenkantenabschnitt II entlang in die in Figur 6 dargestellte Position 5c überführt. Bei der Ausgestaltung der Innenkantenabschnitte I und II ist darauf zu achten, daß zusammen mit dem Rastvorsprung 5e in den jeweiligen Endstellungen eine sichere Positionierung des Eingriffsbolzens 1b gewährleistet ist, jedoch die Überführung zwischen den Endpositionen 5c und 5b entlang der Abschnitte I und II über den Rastfortsatz 5e in einem flüssigen Bewegungsablauf erfolgen kann.

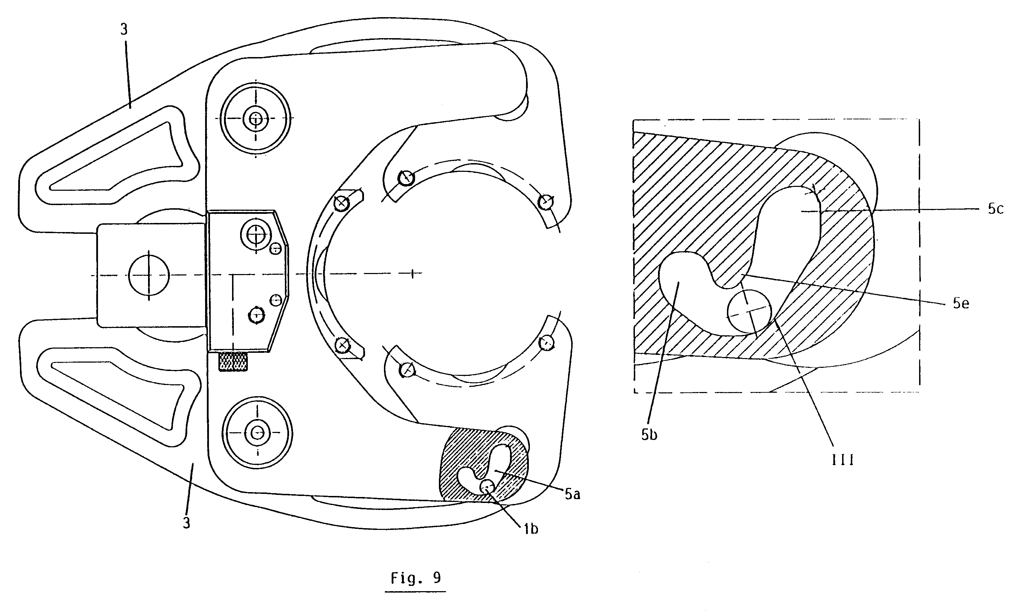

Die Figur 9 zeigt nun einen weiteren Bewegungsablauf der Zange, und zwar für den Fall, wenn diese über ein Zusammendrücken der linksseitigen Enden der Preßschenkel 3 manuell geöffnet wird. Bei diesem Bewegungsablauf läuft der Eingriffsbolzen 1b an dem funktionellen Innenkantenabschnitt III der Kulissenführung 5a entlang, welcher dem Rastvorsprung 5e gegenüberliegt. Bei manuellem Öffnen wird also der Eingriffsbolzen 1b entlang der Kante III von der Position 5c zur Position 5b übeführt, ohne andere Kanten der Führungskulisse 5a zu berühren. Auch der Innenkantenabschnitt III ist bezüglich Länge, Krümmung und Winkellage so ausgelegt, daß ein manuelles Öffnen ohne Hemmung erfolgen kann.

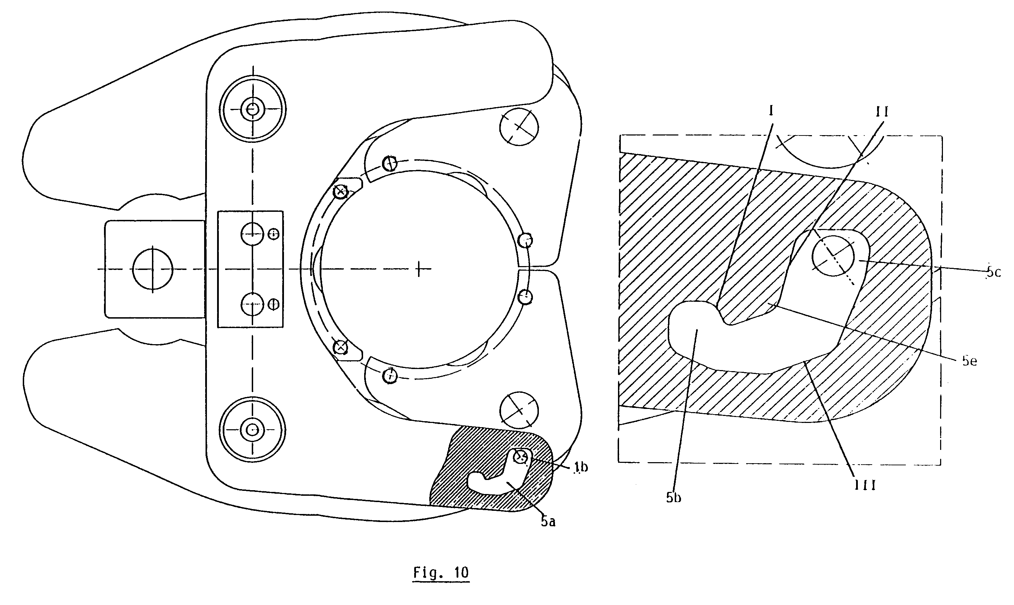

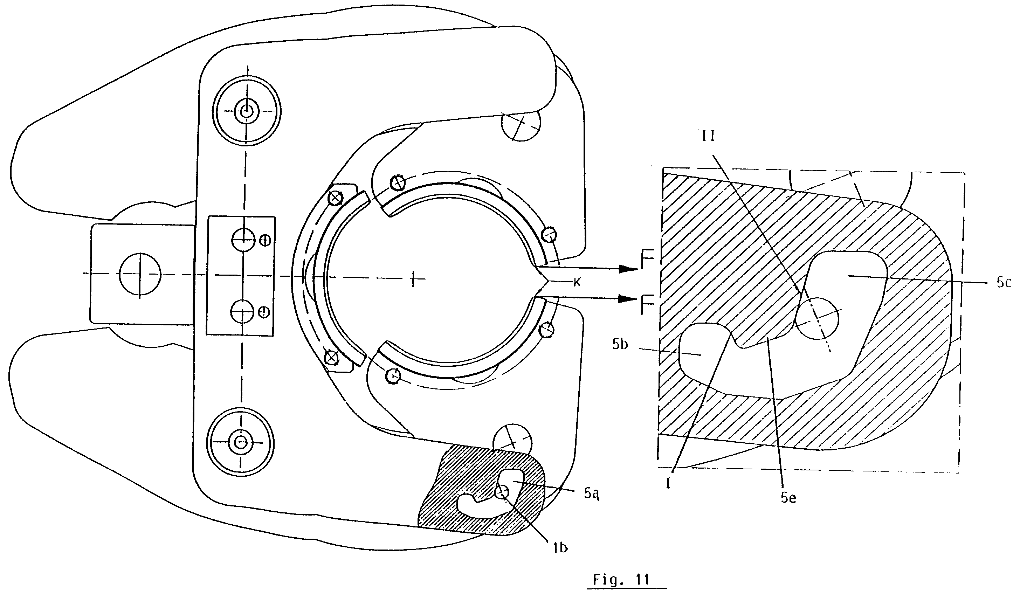

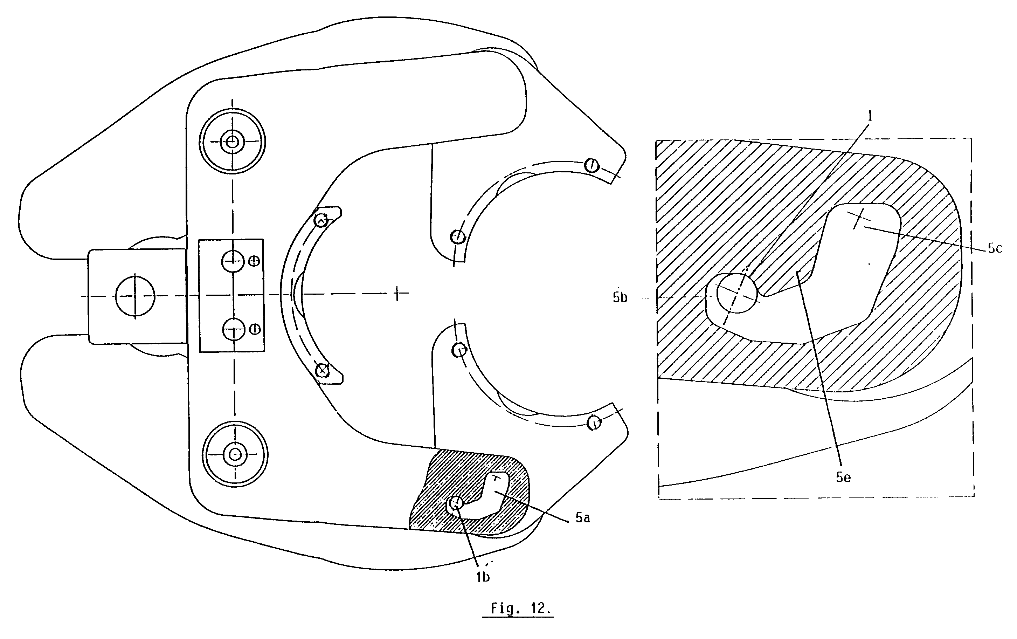

Die Figur 10 bis 12 zeigen den in den Figuren 6 bis 8 dargestellten Öffnungsvorgang beim Abziehen der Zange von einer verpreßten Hülse für eine Preßzange gemäß einer weiteren Ausführungsform der vorliegenden Erfindung. Die in den Figuren 10 bis 13 gezeigte Zange ist zur Verpressung von Hülsen größerer Durchmesser vorgesehen.

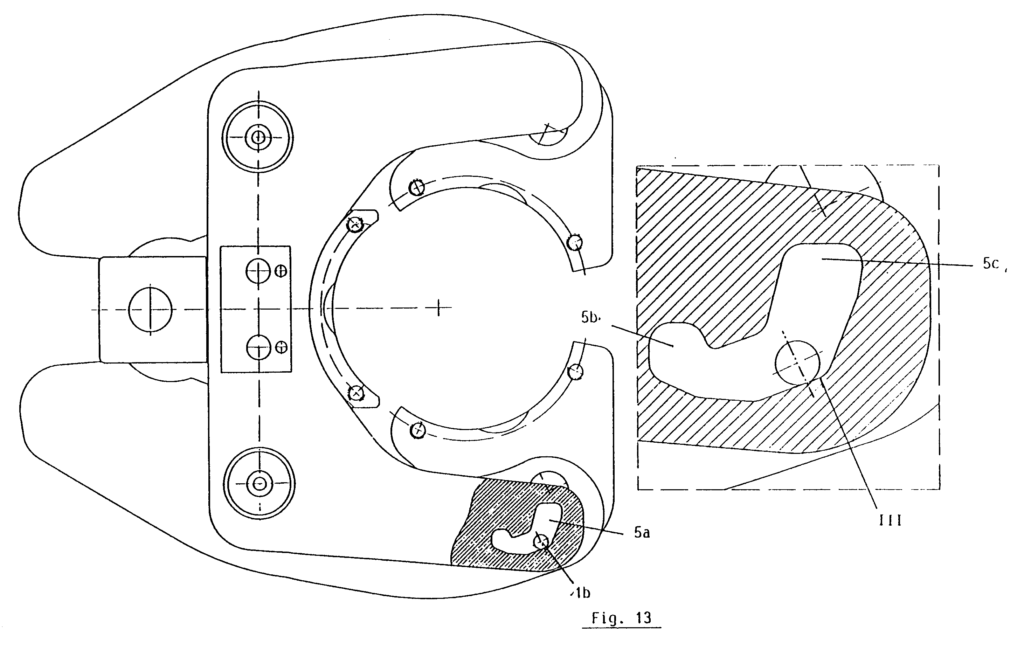

Die Figur 13 zeigt wiederum den Bewegungsablauf in der Kulissenführung beim manuellen Öffnen dieser Preßzange.

Der Ablauf in den Figuren 10 bis 12 sowie in Figur 13 unterscheidet sich grundsätzlich nicht von denjenigen, der oben anhand der Figuren 6 bis 9 erörtert wurde. Diese zweite Ausführungsform wird lediglich vorgestellt, um klarzumachen, daß die Form der Kulissenführung 5a jeweils der Größe der Preßzange angepaßt werden muß. Die funktionellen Innenkanten I, II und III der Führungskulisse 5a gemäß dem zweiten Ausführungsbeispiel sind aber wiederum der Länge, der Winkellage sowie der Krümmung so ausgestaltet, daß eine ungehemmte Überführung des Eingriffsbolzens 1b zwischen den beiden Endpositionen 5b und 5c stattfinden kann.

Die Preßzange, die eine Ausführungsform der vorliegenden Erfindung darstellt, bietet demnach die folgenden Vorteile:
- durch die Verwendung von zwei beweglichen sowie einer festen Preßbacke wird der Angriff an der Preßhülse verbessert und der Materialfluß einer solchen Preßhülse beim Pressvorgang vermindert und damit deren letztendliche Stabilität erhöht;
- die Preßbacken sind von einer Bearbeitungsposition in eine gelöste Position überführbar, so daß variabel auch größere Preßhülsen aufgenommen werden können bzw. Preßeinsätze einfach an- und abmontiert werden können, und
- die Handhabung der Preßzange ist sehr einfach, da der Wechsel zwischen der Bearbeitungsposition der Preßbacken und ihrer gelösten Position automatisch beim Öffnen und Schließen der Preßzange stattfindet.

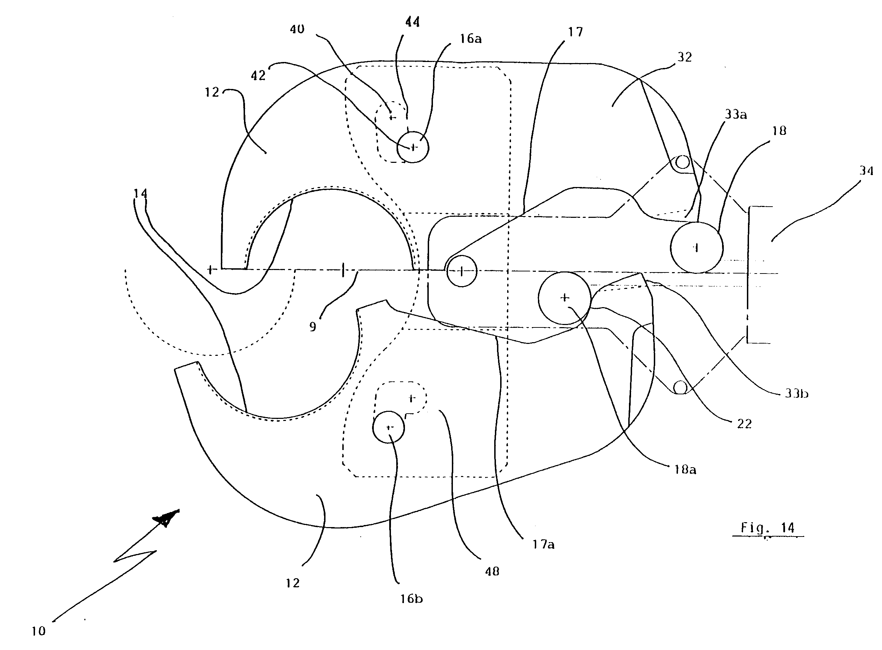

In Fig. 14 ist eine erste Ausführungsform einer Vorrichtung gemäß der Erfindung, nachfolgend als Preßzange bezeichnet, dargestellt worden.

Die Preßzange 10 Weist Preßbacken 12 auf, an deren einander zugewandten Seiten zum einen jeweils eine Preßfläche 14 und jeweils eine Steuerkulisse 17, 17a vorgesehen sind. Die obere Preßbacke 12 mit der Steuerkulisse 17 ist in einer vollkommen zugeschwenkten Stellung, während die untere Preßbacke 12 mit der Steuerkurve 17a in einer aufgeschwenkten Stellung dargestellt ist.

Jede Preßbacke 12 ist über Schwenkpunkte bzw. -achsen 16a, 16b schwenkbar an einer bzw. an zwei Halteplatten 48 gelagert. Die Halteplatte bzw. die Halteplatten 48 sind an dem Antriebsteil 34 über eine Konstruktion zur Abstützung der Preßbacken behalten. Die prinzipielle Ausbildung des Abschnitts 34 kann bezüglich der Auslegung des Getriebes. des Motors, insbesondere Elektromotors, und dergleichen mehr, wie gemäß der gattungsgemäßen Druckschrift ausgebildet sein, die auch insoweit ausdrücklich in den Offenbarungsgehalt der vorliegenden Anmeldeunterlagen durch Bezugnahme ausdrücklich aufgenommen ist, da dort Merkmale aufgeführt sind, die in Kombination mit der hier offenbarten Lehre Erfindungsqualität haben können.

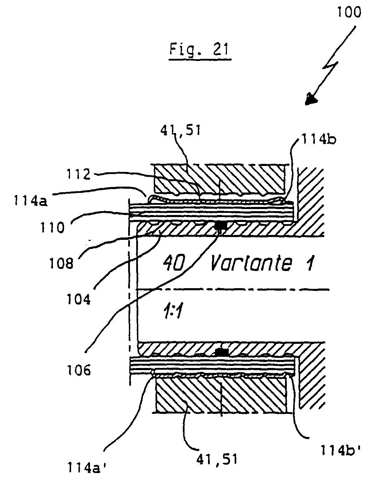

Der Kraftarm einer jeweiligen Preßbacke 12 ist mit diversen aneinander anschließenden und ineinander übergehenden Steuerkurven bzw. -kulissen 17, 17a, 22 versehen. Wenn die Spreizrollen 18, 18a über diese Steuerkurven abrollen, führen die Preßbacken 12 geschwenkt um die Schwenkpunkte bzw. -achsen 16a, 16b und betrieben durch die im Rückzug befindlichen Spreizrollen 18, 18a, eine Schwenkbewegung durch, die dann zum Verpressen einer Preßhülse (nicht dargestellt, bzw. siehe Fig. 21 bis 23) führt.

An den Enden der Kraftarme 32 können ineinandergreifende Bereiche 33a, 33b vorgesehen sein, die zum einen dazu ausgebildet sind, in geöffnetem Zustand die Schub-/Zugstange, an der die Spreizrollen 18, 18a angelenkt werden, zwischen den Kraftarmen durchzulassen, und sind zum anderen so ausgebildet, daß sie im geöffneten Zustand ineinandergreifen können, um den Öffnungswinkel zwischen den beiden Preßbacken 12 zu vergrößern. Dabei kann die Fläche 33a symmetrisch zur Symmetrieachse 9 der Preßzange 10 als eine verschmälerte Abrollfläche ausgebildet sein, während die Abrollfläche 33b derart in zwei im wesentlichen gleich große Abrollflächen unterteilt sein kann, daß die Abrollfläche 33a zwischen die Teilabschnitte der Abrollfläche 33b eingeführt werden kann. Auch diesbezüglich kann auf die gattungsgemäße Druckschrift hingewiesen werden, die eine entsprechende Ausbildung ebenfalls beschreibt und auch insoweit in die Offenbarung der vorliegenden Anmeldeunterlagen ausdrücklich einbezogen wird.

Wesentlich ist, daß die Schwenkpunkte bzw. -achsen 16a, 16b an den Halteplatten 48 in Führungskurven 44 geführt sind, und zwar zwischen zwei Extremalpunkten, nämlich zum einen dem Einführ- bzw. Entnahmepunkt 40 und der Verpreßstellung 42. Beispielhaft ist die Schwenkachse 16b in der Entnahme- bzw. Einführstellung für die Preßbacke 12 dargestellt. Die Schwenkachse 16a ist in der Verpreßstellung 42 wiedergegeben.

Natürlich kann die Führungskurve 44 auch in den Preßbacken vorgesehen sein, während die Schwenkachsen 16a, 16b fest mit den Halteplatten verbunden sind.

Die Preßbacken 12 können sowohl manuell als auch automatisch durch eine entsprechende Bewegung der Spreizrollen 18, 18a entlang den Steuerkurven 17, 17a in die beiden Extremalstellungen 40, 42 überführt werden.

Insofern es gewünscht wird, daß die beiden Preßbacken 12 derart beim Verpreßvorgang auf eine Preßhülse einwirken, daß das Material der Preßhülse während des Verpreßvorganges nicht über große Strecken befördert werden muß, was den erforderlichen Kraftaufwand ebenfalls stark reduziert, kann die Führungskurve 44 mit einem Wendepunkt ausgestattet sein, so daß die Preßbacken 12 durch die Überwindung des Wendepunktes durch deren jeweilige Schwenkachsen 16a, 16b zu der Symmetrieachse bzw. -ebene 9 wenigstens teil- oder näherungsweise parallel ausgerichtet werden, um dann durch die Fortsetzung der Bewegung der Schwenkachsen 16a, 16b in den entsprechend ausgebildeten Führungskurven eine Verpressung vorzunehmen, bei der das Material der Preßhülse während des Verpreßvorganges keine großen Strecken zurückzulegen hat, so daß nur geringe Verformungen auftreten.

Die Innenflächen der Preßflächen 14 können so ausgebildet sein, daß sich Einsätze für unterschiedliche Durchmesser von verschiedenen Hülsengrößen in die Preßbacken einsetzen lassen, so daß ein Satz von Preßbacken mit diversen Einsätzen für einige Rohrdurchmesser bzw. Hülsendurchmesser verwendet werden kann. Es ist auch möglich, an den Preßflächen 14 Gleit- bzw. Rollager vorzusehen, die dann beim Zuschwenkvorgang gegenüber der zu verpressenden Hülse wenigstens auf einer Seite eine Verschwenkbewegung vornehmen, so daß eine Radialisierung der durch den Schwenkvorgang aufgebrachten Kräfte dazu führt, daß ebenfalls ein geringer Materialfluß von dem hinteren, den Steuerkurven 17 zugeordneten Bereich der Verpreßflächen 14 zu dem vorderen Bereich auftritt.

Die Zusammenwirkung der Führungskurve 44 mit dem Bolzen, der in den Extremstellungen 40, 42 sein kann, führt dazu, daß eine Fehlpressung unmöglich ist. Ist der Bolzen nämlich nicht in der korrekten Position, kann sich der Bolzen nicht gegenüber der Führungskurve abstützen, und eine auftretende Schubkraft kann nicht durch das Verschwenken der Preßbacken um die Schwerpunkte übertragen werden.

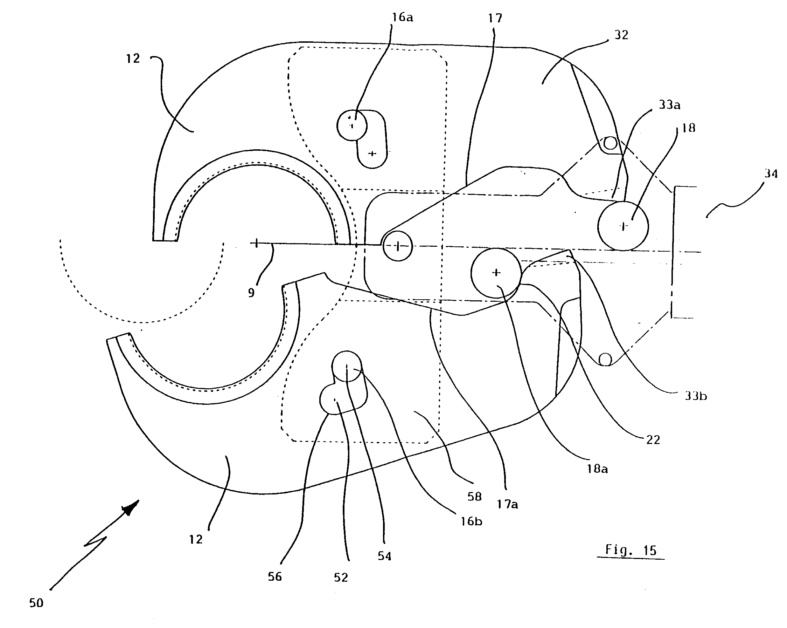

In Bezug auf die Fig. 15 sowie die Fig. 16 bis 18 und 19 und 20 sei vorausgeschickt, daß die dort wiedergegebenen Teile, insofern sie den in Fig. 1 dargestellten Teilen entsprechen oder zumindest funktionsgleich sind, mit den gleichen Bezugsziffern benannt sind. Insofern ist es nur noch erforderlich, die in den weiteren Figuren neuerlich aufgeführten Merkmale im einzelnen zu beschreiben.

In Fig. 15 ist die prinzipielle Ausgestaltung der Preßbacken 12 der Ausführungsform einer Preßzange 50 gleich zu der nach Fig. 14.

Abweichend zu der Ausführungsform gemäß Fig. 14 sitzt hier die aktive Verpreßstellung 52 am oberen Ende der Führungskurve 56 und ist gegenüber der Entnahme- bzw. Einführposition 54 winklig versetzt, so daß sich im Prinzip eine Führungskurve 56 ergibt, die gegenüber der nach Fig. 14 um 180 Grad gedreht ist.

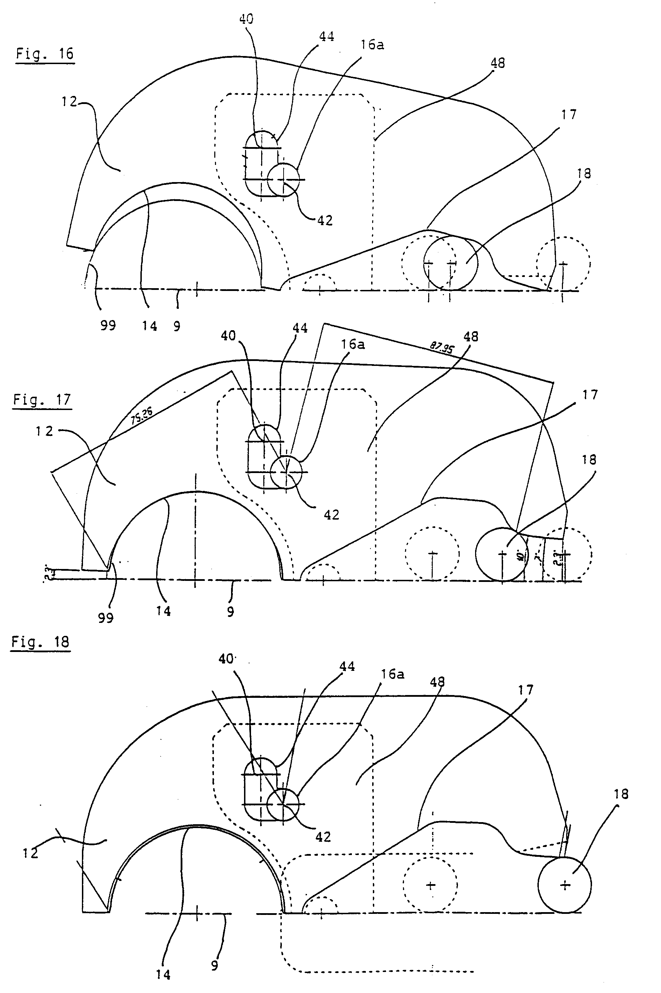

In den Fig. 16 bis 18 und 19, 20 ist prinzipiell die Ausführungsform 10 gemäß Fig. 14 in verschiedenen Stadien der möglichen Bewegungsabläufe dargestellt.

In Fig. 16 zeigt eine Preßzange mit Merkmalen nach der Erfindung, etwa nach Fig. 14, am Beginn eines Verpressungsvorganges, d.h. bei der Vorpressung, wenn die Verpreßfläche 14 damit beginnt, die als Teilkreis dargestellte Hülse 99 zu umgreifen. Die Spreizrolle 18 ist im Begriff, über die beschriebene Mimik nach hinten von dem Schwenkpunkt 16a weggezogen zu werden. Der Schwenkpunkt 16a ist hier fest in der aktiven Stellung 42 belegen.

Auch in den Darstellungen gemäß den Fig. 16 und 18 ist der Schwenkpunkt 16a fest in der aktiven Verpreßstellung gehalten und durch die Zugkraft, die auf die Spreizrolle 18 einwirkt, wird diese entlang der Steuerkurve bzw. -kulisse 17 nach hinten gezogen, wobei die Hülse 99 zunehmend umgriffen wird und schließlich verpreßt wird. Es sei vermerkt, daß hier in den Fig. 16 bis 18 sowie den Fig. 19 und 20 nicht maßstabsgetreu, sondern um ca. 70% verkleinert wiedergegeben ist, so daß 1 mm gemäß Darstellung etwa 1,4 mm real entspricht.

Die Fig. 17 zeigt den Beginn der Vollpressung und die Fig. 18 zeigt das Ende der Pressung, wenn die Preßhülse ihre letztendliche Form eingenommen hat und die durchzuführende Verbindung bewerkstelligt ist.

Es ist auch vorteilhaft, wenn die Führungskulisse bzw. die Führungskulissen 44, 56 mit wenigstens einem Steuerkurvenabschnitt versehen sind, der bei Einwirkung der Kraftübertragungseinrichtung auf diese die Bearbeitungsorgane, bevorzugt Preßbacken 12, in eine Bearbeitungsstellung überführt.

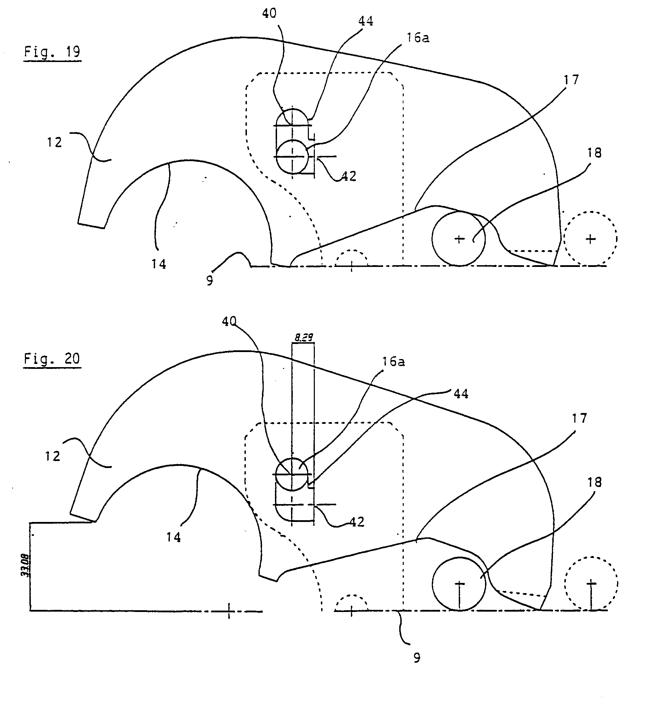

In den Fig. 19 und 20 ist zu erkennen, wie die Preßbacke bzw. die Preßbacken 12 nach einem Verpreßvorgang wieder geöffnet werden können. Zunächst wird die Schwenkachse 16a entlang der Führung 44 nach vorne aus der aktiven Stellung 42 heraus verschoben, so daß die Schwenkachse in dem freien nach außen von der Symmetrieachse 9 weggerichteten Bereich frei bewegt werden kann, so daß die Schwenkachse 16a, wie in Fig. 20 zu erkennen, in die Entnahme bzw. Einführstellung 40 gelangt.

In den Fig. 21 bis 23 sind bevorzugte Ausführungsformen einer Leitungsverbindung bzw. eines Leitungsanschlusses 100, 200, 300 mit einer bevorzugten Preßhülse 112, 212, 312 wiedergegeben.

Das wesentliche der wiedergegebenen Preßhülse 112, 212, 312 ist eine wenigstens bereichsweise umfängliche Auskragung 114a, 214a, 314a, die wenigstens an einem Ende der zylinderförmigen Hülse 112 vorgesehen ist.

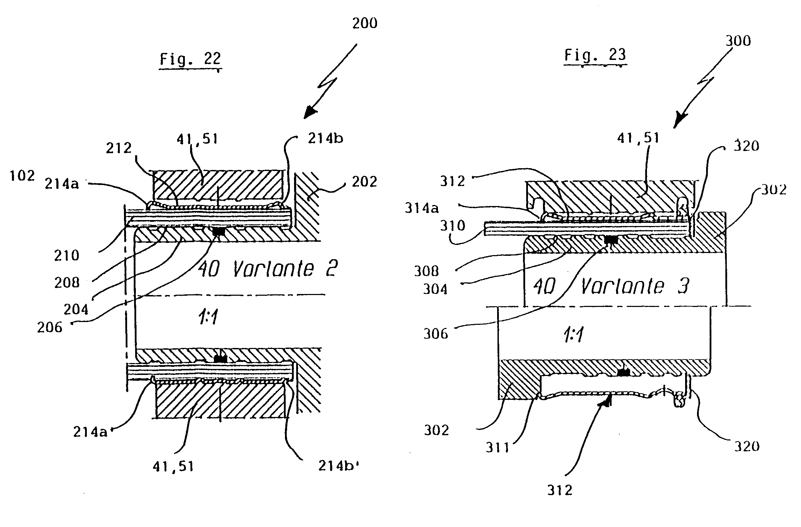

Bei den Ausführungen gemäß den Fig. 21 und 22 ist an jedem Ende der Preßhülse 112, 212 eine entsprechende Auskragung vorgesehen, die abschlußseitig wieder nach innen auf die Zylinderachse zu ausgebildet bzw. gebogen ist. Sobald ein Einsatz 41, 51 in einer Preßfläche 14 einer Preßbacke 12 auf die Preßhülse 112, 212 bzw. 312 einwirkt, wird die wenigstens eine Auskragung 114a, 214a, 314a einwärts auf eine Leitung 210 gebogen und wird in diese hineingedrückt, so daß über den form- und kraftschlüssigen Eingriff der ehemaligen Auskragung 114a', 214a' eine zusätzliche Haltekraft auf das Leitungsende 110, 210, 310 ausgeübt wird.

Eine zusätzliche Dichtung 106, 206, 306 trägt auch in Verbindung mit einer rinnenförmigen Oberflächenstruktur 108, 208, 308 auf einer Stützhülse 104, 204, 304 zu einer dichten Anbindung der Leitung an den dargestellten Anschluß 100, 200, 300 bei.

Das Ende der anzuschließenden Rohrleitung 110, 210, 310 kann beabstandet zu dem Anschluß 102, 202 angeordnet werden bzw. unmittelbar an den Anschlag 302 anstoßen oder aber über eine Trennhülse 320 bevorzugt aus nichtleitendem Material, etwa Kunststoff, angrenzen.

Während die oberen Abschnitte der Fig. 21 bis 23 die Ausführungsformen von verschiedenen bevorzugten Hülsen in einem nicht verpreßten Zustand zeigen, zeigen die unteren Abschnitte der Fig. 21, 22 die Hülsen, nachdem eine Verpressung über die Verpressungseinsätze 41, 51 stattgefünden hat. Zwischen dem Anschlag 202 und dem Ende der anzuschließenden Leitung 110, 210 bzw. der Hülse 212, 112 ist ein Abstand gelassen, um eine Sichtkontrolle des ordnungsgemäßen Sitzes der Hülse bzw. des Leitungsendes gegenüber dem Anschlag 102, 202 und damit gegenüber der Stützhülse 104, 204 überprüfen zu können.

Im unteren Abschnitt der Fig. 23 ist eine mit den Charakteristiken gemäß den Fig. 21, 22 ausgestattete Preßhülse 312 dargestellt, wie sie in Verbindung mit dem Ringteil 320 für die Lagerung und den Transport an einer Stützhülse bzw. an dem Anschlag 302 festgelegt werden kann. Das radial innere Ende des Ringteils 320 legt die Preßhülse 312 auf der Stützhülse 304 fest, wobei eine Ausnehmung 311 an dem Anschlag 302 mit der hakenartig ausgebildeten Auskragung 314a fixierend in einen klemmenden Eingriff gelangen kann.

## Patentansprüche

1. Vorrichtung zum Bearbeiten, etwa Schneiden bzw. Pressen, insbesondere für deformierbare Hülsen, vorzugsweise für Verbundrohre bzw. -leitungen, bevorzugt von Leitungsverbindungen bzw. -anschlüssen, z.B. Preßzange,
- mit Bearbeitungsorganen (1, 2) bzw. Preßbacken, von denen wenigstens eines schwenkbar angeordnet ist,
- mit mindestens einer Betätigungseinrichtung (3) für die Bearbeitungsorgane (1, 2),
**dadurch gekennzeichnet**, daß
mindestens drei Bearbeitungsorgane (1, 2), insbesondere Preßbacken, vorgesehen sind, welche die Bearbeitung, insbesondere das Schneiden bzw. Pressen gemeinsam vornehmen.

2. Vorrichtung nach Anspruch 1, **dadurch gekennzeichnet**, daß zwei von drei Bearbeitungsorganen (1), insbesondere Preßbacken, schwenkbar sind, und das dritte (2) bevorzugt fest angeordnet ist.

3. Vorrichtung nach einem der Ansprüche 1 oder 2, **dadurch gekennzeichnet**, daß durch eine Kraftübertragungseinrichtung, die auf die Betätigungseinrichtung (3) wirkt, eine Kraft, insbesondere eine Zugkraft oder eine Druckkraft, erzeugbar ist, die das Schließen der Bearbeitungsorgane (1, 2) bewirkt.

4. Vorrichtung nach einem der Ansprüche 1 bis 3, **dadurch gekennzeichnet**, daß die Betätigungseinrichtung (3) eine Steuerkurve bzw. -kulisse (4) aufweist, an der mindestens eine Rolle bzw. Spreizrolle einer Kraftübertragungseinrichtung geführt wird, wobei die Steuerkurve bzw. -kulisse (4) im geöffneten Zustand der Bearbeitungsorgane (1) einen kleineren Winkel einschließt als im geschlossenen Zustand.

5. Vorrichtung nach einem der Ansprüche 1 bis 4, **dadurch gekennzeichnet**, daß die Bearbeitungsorgane (1), insbesondere Preßbacken, Einsätze aufweisen, die bei der Bearbeitung an dem zu bearbeitenden Körper zu liegen kommen, wobei diese Einsätze entweder fest oder in ihrer Umfangsrichtung verschieblich an den Bearbeitungsorganen angebracht sind.

6. Vorrichtung nach dem Oberbegriff des Patentanspruchs 1 bzw. einer der Patentansprüche 1 bis 5,
**dadurch gekennzeichnet**, daß
wenigstens ein Bearbeitungsorgan (1), insbesondere Preßbacke, gegenüber seinem Schwenkpunkt bzw. seiner Schwenkachse (1a) automatisch mit der Bewegung der Betätigungseinrichtung (3), insbesondere bestehend aus zwei Schwenkhebeln, zwischen einer Bearbeitungsposition und einer gelösten Position wechseln kann.

7. Vorrichtung nach Anspruch 6, **dadurch gekennzeichnet**, daß der Positionswechsel der schwenkbaren Bearbeitungsorgane (1), insbesondere Preßbacken, mit Hilfe einer Kulissenführung (1b, 5a) an einem feststehendenen Vorrichtungsteil (5) durchgeführt wird.

8. Vorrichtung nach Anspruch 7, **dadurch gekennzeichnet**, daß die Kulissenführung eine Führungskulisse (5a) im feststehenden Vorrichtungsteil (5) und ein Eingriffsbauteil (1b) für die Kulisse (5a) am jeweiligen schwenkbaren Bearbeitungsorgan (1), insbesondere Preßbacke, aufweist, oder daß die Führung eine Führungskulisse am jeweiligen schwenkbaren Bearbeitungsorgan (1), insbesondere Preßbacke, und ein Eingriffsbauteil für die Kulisse im feststehenden Vorrichtungsteil (5) aufweist.

9. Vorrichtung nach einem der Ansprüche 6 bis 8, **dadurch gekennzeichnet**, daß das feststehende Vorrichtungsteil (5) ein an der Betätigungseinrichtung (3) gelagertes Flachbauteil ist, welches einen Führungsfortsatz (5d) für jedes schwenkbare Bearbeitungsorgan (1), insbesondere Preßbacke, aufweist, in dem die Kulissenführung bzw. das Eingriffsbauteil angeordnet ist, bzw. daß die Führungskulisse (5a) jeder Kulissenführung (1b, 5a) eine gekrümmte Form mit zwei Endpositionen (1b, 1c), nämlich für die Bearbeitungs- und die gelöste Position der Bearbeitungsorgane aufweist, wobei das Eingriffsbauteil (1a) für die Kulisse (5a) durch die Krümmung in jeder der Positionen vorübergehend festgelegt wird.

10. Vorrichtung nach Anspruch 9, **dadurch gekennzeichnet**, daß die Führungskulisse (5a) bevorzugt nierenförmig ausgebildet ist und ihre konvexen Krümmungsabschnitte vorzugsweise im wesentlichen zum Bearbeitungszentrum hin gerichtet sind, wobei der mittlere Abschnitt der Kulisse (5a) insbesondere einen Rastvorsprung (5e) ausbildet.

11. Vorrichtung nach Anspruch 10, **dadurch gekennzeichnet**, daß der Abstand zwischen den gegenüberliegenden Innenkanten der Führungskulisse größer ist als die Dicke des Eingriffsbauteils (1a), so daß jede der Innenkanten eine eigene Führungsfünktion übernimmt, wenn das Eingriffsbauteil an ihr entlang geführt wird.

12. Vorrichtung nach Anspruch 10 oder 11, **dadurch gekennzeichnet**, daß ein erster Innenkantenabschnitt (I), der vor dem Rastvorsprung im Bereich der Öffnungsposition des Eingriffsbauteils (1a) liegt, nach Winkelposition und Länge so ausgestaltet ist, daß bei einem Einführen eines zu bearbeitenden Körpers in die geöffnete Vorrichtung, bei dem eine Kraftwirkung auf die Bearbeitungsorgane (1) ausgeübt wird, welche diese zur Bearbeitungposition hin verschiebt, das Eingriffsbauteil (1a) an diesem ersten Innenkantenabschnitt (I) entlang über den Rastvorsprung (5e) hinweg bewegt wird, ohne daß eine Blockierung dieser Bewegung auftritt, wobei bevorzugt der erste Innenkantenabschnitt (I) ferner so ausgestaltet ist, daß das Eingriffsbauteil (1a) in der gelösten Position der Bearbeitungsorgane (1) ohne oder bei geringer Krafteinwirkung auf die Bearbeitungsorgane (1) sicher vor dem Rastvorsprung (5e) gehalten wird.

13. Vorrichtung nach einem der Ansprüche 10 bis 12, **dadurch gekennzeichnet**, daß ein zweiter Innenkantenabschnitt (II), der hinter dem Rastvorsprung (5e) liegt, nach Winkelposition und Länge so ausgestaltet ist, daß bei einem Ausführen eines zu bearbeitenden Körpers aus der Vorrichtung, bei dem eine Kraftwirkung auf die Bearbeitungsorgane (1) ausgeübt wird, welche diese zu einer geöffneten Position hin verschiebt, das Eingriffsbauteil (1a) an diesem zweiten Innenkantenabschnitt (II) entlang bewegt wird, wobei bevorzugt ein dritter Innenkantenabschnitt (III), der dem Rastvorsprung (5e) gegenüberliegt, nach Winkelposition und Länge so ausgestaltet ist, daß bei einem Öffnen der Bearbeitungsorgane mittels der Betätigungsvorrichtung, das Eingriffsbauteil (1a) an diesem dritten Innenkantenabschnitt (III) entlang bewegt wird.

14. Vorrichtung nach einem der Ansprüche 9 bis 13, **dadurch gekennzeichnet**, daß die Kulissenführung (1b, 5a) so ausgebildet ist, daß, in Zusammenwirkung mit der Kraftübertragungseinrichtung, beim Bearbeitungsvorgang das Eingriffsbauteil (1b) für die Führungskulissen (5a) in die Endposition (5c) der Kulissenführung (5a) verbracht bzw. dort gehalten wird, für die das Bearbeitungsorgan (1), insbesondere Preßbacke, in der Bearbeitungsposition ist, und ansonsten in die andere Endposition (5b) verbracht bzw. dort gehalten wird, in der das Bearbeitungsorgan (1), insbesondere Preßbacke, in der gelösten Position ist, wobei insbesondere die Kulissenführung (1b, 5a) so ausgebildet ist, daß, in Zusammenwirkung mit der Kraftübertragungseinrichtung, die Bearbeitungsorgane (1), insbesondere Preßbacken, erst kurz vor dem Bearbeitungsvorgang in die Bearbeitungsposition gebracht und kurz danach wieder in die gelöste Position überführt werden.

15. Vorrichtung nach dem Oberbegriff des Patentanspruchs 1 **dadurch gekennzeichnet**, daß
das wenigstens eine Bearbeitungsorgan (12), insbesondere Preßbacke, gegenüber seinem Schwenkpunkt bzw. seiner Schwenkachse (16a, 16b) in seiner Lage veränderbar ist, und bevorzugt beide Bearbeitungsorgane, bevorzugt Preßbacken (12) schwenkbar und in ihrer Läge gegenüber ihren Schwenkpunkten (16a, 16b) veränderbar sind.

16. Vorrichtung nach Anspruch 15, **dadurch gekennzeichnet**, daß dem bzw. den Bearbeitungsorganen, insbesondere Preßbacken (12) eine bzw. jeweilige Führungskulissen (44, 56) zugeordnet sind, so daß der Abstand zwischen den Preßbacken, insbesondere zwischen zwei Grenzwerten veränderbar ist.

17. Vorrichtung nach einem der Ansprüche 15 oder 16, **dadurch gekennzeichnet**, daß durch die Kraftübertragungseinrichtung eine Zugkraft erzeugbar ist, die zum Schließen der Bearbeitungsorgane (12) heranziehbar ist, wobei bevorzugt durch zumindest eine der Bearbeitungseinrichtungen (32, 18) die Zugkraft progressiv auf mindestens eines der Bearbeitungsorgange (12) übertragbar ist, wobei der Kraftarm der Betätigungseinrichtung (32, 18) gegenüber dem Lastarm der Bearbeitungsorgane (12) zunimmt.

18. Vorrichtung nach einem der Ansprüche 15 bis 17, **dadurch gekennzeichnet**, daß eine Verpreßführung für die Preßbacken vorgesehen ist, so daß das Material der Preßhülse beim Verpreßvorgang keine größeren Strecken zurücklegt, wobei die Verpreßführung bevorzugt eine Gleit- bzw. Rollführung, beispielsweise in der Form eines Kugellagers, zwischen einer oder mehreren Preßflächen, die auf die Preßhülse einwirken, und einer bzw. beiden Preßbacken (12) umfaßt, so daß eine Radialisierung der Preßkräfte auftritt.
